# EUROPÄISCHE PATENTSCHRIFT

(11) **EP 3 495 131 B1**
(45) Veröffentlichungstag und Bekanntmachung des Hinweises auf die Patenterteilung: **26.01.2022**
(21) Anmeldenummer: 18198526.8
(22) Anmeldetag: 04.10.2018
(51) Int. Cl.: B29D 30/30, B29D 30/26

(54) **VORRICHTUNG UND VERFAHREN ZUM AUFWICKELN EINES ZUR HERSTELLUNG EINES GÜRTELS EINES FAHRZEUGLUFTREIFENS GEEIGNETEN GÜRTELAUFBAUSTREIFENS AUF EINE GÜRTELAUFBAUTROMMEL**
DEVICE AND METHOD FOR WINDING A BELT CONSTRUCTION STRIP FOR FORMING A BELT OF A PNEUMATIC TYRE FOR A VEHICLE ON A BELT CONSTRUCTION DRUM
DISPOSITIF ET PROCÉDÉ D'ENROULEMENT D'UNE CEINTURE APPROPRIÉE À LA FABRICATION D'UNE BANDE DE STRUCTURE DE CEINTURE D'UNE CEINTURE DE PNEUMATIQUE DE VÉHICULE À UN TAMBOUR DE STRUCTURE DE CEINTURE

(30) Priorität: 11.12.2017 DE 102017222372
(43) Veröffentlichungstag der Anmeldung: 12.06.2019
(73) Patentinhaber: Continental Reifen Deutschland GmbH, 30165 Hannover (DE)
(72) Erfinder: Scheuer, Renke, 30167 Hannover (DE); Mouliom, Herve, 31141 Hildesheim (DE); Albers, Oliver, 31303 Burgdorf (DE)
(74) Vertreter: Continental Corporation

(56) Entgegenhaltungen:
- EP-A1- 0 671 255
- EP-A1- 2 965 895
- WO-A1-2007/118688
- WO-A1-2008/012126
- WO-A1-2015/069102
- DE-A1- 19 938 151
- DE-A1-102006 018 642
- DE-A1-102008 021 042
- JP-A- 2010 260 178
- US-A1- 2013 199 697

## Beschreibung

Die Erfindung betrifft ein Verfahren und eine Vorrichtung zum Aufwickeln eines zur Herstellung eines Gürtels eines Fahrzeugluftreifens geeigneten Gürtelaufbaustreifens auf eine Gürtelaufbautrommel sowie eine Vorrichtung zum Aufwickeln eines zur Herstellung eines Gürtels eines Fahrzeugluftreifens geeigneten Gürtelaufbaustreifens auf eine Gürtelaufbautrommel.

Bei der Herstellung eines Reifen werden mehrere Endlosstreifen hergestellt, beispielsweise für einen Gürtel oder für einen Laufstreifen.

Der Endlos-Streifen wird dann in Aufbaustreifen mit einer passenden Größe geschnitten. Der Aufbaustreifen, der den Gürtel darstellt, wird Gürtelaufbaustreifen genannt.

Im folgenden Herstellungsschritt muss der Gürtelaufbaustreifen dann auf eine Gürtelaufbautrommel aufgelegt werden. Nach dem Auflegen des Gürtelaufbaustreifens auf die Gürtelaufbautrommel muss der Gürtelaufbaustreifen auf der Gürtelaufbautrommel nicht nur selbst eine möglichst gleichförmige Form, insbesondere gleichförmige Kanten, aufweisen, sondern muss auch möglichst präzise auf der Gürtelaufbautrommel aufliegen. Bei dem präzisen Auflegen auf der Gürtelaufbautrommel, welches auch "aufwickeln" genannt wird, ist es insbesondere wichtig, dass die jeweils gegenüberliegenden Seitenkanten des Gürtelaufbaustreifens nicht nur parallel sind, sondern auch möglichst gradlinig um die Gürtelaufbautrommel herumlaufen. Schwankungen in der Dicke des Gürtelaufbaustreifens sowie Abweichungen von der Gradlinigkeit oder Parallelität der beiden Seitenkanten des Gürtelaufbaustreifens auf der Gürtelaufbautrommel können dazu führen, dass der hergestellte Reifen eine verkürzte Lebensdauer aufweist oder erst gar nicht verwendet werden kann.

Bei den besagten Abweichungen handelt es sich meistens um Abweichungen im Millimeterbereich oder darunter. Häufig werden mehrere Gürtelaufbaustreifen übereinander auf ein- und dieselbe Gürtelaufbautrommel aufgelegt.

Hinzukommt auch, dass beim Auflegen eines zweiten Gürtelaufbaustreifens auf einen darunter liegenden ersten Gürtelaufbaustreifen die beiden Gürtelaufbaustreifen möglichst genau übereinander aufgelegt werden. Das Auflegen soll insbesondere die vorstehende Präzision erreichen, ohne dabei den Herstellungsprozess zu verlangsamen.

Um die besagten Abweichungen genau beim Aufwickeln auf die Gürteltrommel ausgleichen zu können, müssen die Abweichungen auf schnelle und zuverlässige Weise präzise erkannt werden.

Im Stand der Technik sind verschiedene Verfahren zum Aufwickeln auf eine Gürtelaufbautrommel bekannt:
DE 19641509 C2 betrifft ein "Verfahren zum Transport eines Gürtelaufbaustreifens für den Aufbau eines Gürtels für einen Fahrzeugluftreifen mit parallelen schräg zur Förderrichtung verlaufenden angeordneten in Kautschuk eingebetteten Festigkeitsträgern [...] zu einer nachgeordneten Weiterverarbeitungseinrichtung und zum Aufbereiten des Gürtelaufbaustreifens zur Weiterverarbeitung in der nachgeordneten Weiterverarbeitungseinrichtung" .
DE 3151395 A1 offenbart "eine Zentriervorrichtung zum kontinuierlichen Zentrieren eines reifenförmigen Gutes auf einer Rollenbahn [...], wobei die Stützrollen bezüglich dieser Mittellinien der Rollenbahn geneigt sind und Führungsrollen nur auf einer Seite der Rollenbahn angeordnet sind, und wobei eine Abtastvorrichtung auf der anderen Seite der Rollenbahn die gegenüberliegende Kante des Streifens abtastet, wobei Verschiebemittel sowohl mit der Abtasteinrichtung als auch mit den Führungsrollen gekoppelt sind, um beide kontinuierlich derart zu verschieben, dass die Abtasteinrichtung und die Führungsrollen im gleichen Abstand zur Mittellinie der Rollenbahn bleiben" (siehe Zusammenfassung).
Dokument DE 10 2008 021 042 A1 offenbart ein "Verfahren zum Aufwickeln eines Materialstreifens (3) auf eine Reifenaufbautrommel mit einem Servicer (2), mit folgenden Schritten: Zuführen eines Materialstreifens (3) auf einem Servicer (2)zur Reifenaufbautrommel (1), Auflegen und Fixieren der vorderen Spitze (12) des Materialstreifens(3) auf die Reifenaufbautrommel (1), kontinuierliche Messung der relativen Position der vorderen Splice-Kante(8) des Materialstreifens (3) beim Auflaufen auf die Reifenaufbautrommel(1) mit einem Sensorsystem, Vergleichen der Ist-Position mit einer vorbestimmten Soll-Position der vorderen Splicekante (8) des Materialstreifens (3), Einstellen einer gezielten Regelung bei einer Abweichung von Ist- und Sollposition der vorderen Splicekante (8), wobei die Regelung über eine seitliche Bewegung des Servicers (2) parallel zur Achsrichtung der Reifenaufbautrommel(1) erfolgt und wodurch die Position der Splicekante (8) im Wesentlichen mit der Soll-Position in Übereinstimmung gebracht wird, Aufwickeln des Restteiles des Materialstreifens (3), und Zusammenspleißen der hinteren (9) mit der vorderen Splicekante(8) des Materialstreifens (3) auf der Reifenaufbautrommel zu einem im Wesentlichen geschlossenen Ring".
Dokument WO 200//118688 A1 offenbart eine "Verfahren zum Aufbau eines Reifens, bei dem Materialstreifen (7) von Förderern (3) mindestens einer Trommel (2) zugeführt und quer zu ihrer Laufrichtung durch eine Lageregelung geführt werden, um anschließend auf die Trommel (2) aufgebracht zu werden, wobei die Lage der Materialstreifen (7) auf der Trommel (2) quer zur Laufrichtung erfaßt und mit einem Sollwert verglichen wird, und das Vergleichsergebnis in die Lageregelung von mindestens einem der Förderer (3) gekoppelt wird, dadurch gekennzeichnet, daß die Lage des Materialstreifens (7), das Vergleichsergebnis und/oder das Ausgangssignal des Reglers (15) gespeichert wird, wobei das gespeicherte Signal frühestens beim nächsten Zuführen des Materialstreifens (7) durch denselben Förderer (3) auf dessen Lageregelung einwirkt".
Dokument JP 2010 260178 A offenbart eine Vorrichtung, bei der die Zentren des Reifenaufbaugürtels und der Reifenaufbautrommel zueinander ausgerichtet werden.
DE 6981493 T2 offenbart ein "Verfahren zum Befördern einer länglichen Streifenkomponente und Zentrieren der Streifenkomponente, mit dem Schritt des Beförderns der Komponente an einem ersten Band eines ersten Bandförderers mit einem Eintrittsende und einem Austrittsende" . Das Dokument mit der "Application Number" US 114 987 offenbart eine Vorrichtung zum Fixieren eines Reifenkomponentenbauteils mit Corden auf einer Aufbautrommel, wobei die Corde in dem Reifenkomponentenaufbauteil in einem vorbestimmten Winkel eingefügt sind und die gegenüberliegenden Enden entsprechend in paralleler Richtung zu dem besagten Corden in eine bestimmte Länge geschnitten sind.
Dokument WO 2012/139556 A1 offenbart ein "Verfahren zur Ausrichtung eines Gürtelaufbaustreifens, der ein Mittelteil sowie dreieckartige Endstücke aufweist und derart auf eine Reifenaufbautrommel aufgewickelt wird, dass sich die dreieckförmigen Endbereiche mindestens bereichsweise nebeneinander erstrecken".
Dokument WO 2015/069102 A1 offenbart ein Verfahren zum Zentrieren eine Reifenkomponente [...] mit dem Gebrauch einer Zentrierungseinrichtung, wobei die Reifenkomponente ein führendes Ende, ein nachlaufendes Ende und einen Hauptteil zwischen dem führenden und dem nachlaufenden Ende umfasst, wobei die Reifenkomponente eine erste longitudinale Kante und eine zweite longitudinale Kante zumindest entlang des Hauptteils aufweist, wobei die Zentrierungseinrichtung ein erstes Förderband ein zweites Förderband und eine Trommel umfasst.

Eine Zubringereinrichtung für eine Reifenaufbautrommel, insbesondere für eine Gürteltrommel für den Aufbau eines mehrlagigen Gürtelpakets, ist in der Anmeldeschrift WO 2008/012126 A1 offenbart.

Eine Aufgabe, die der Erfindung zugrunde liegt, besteht darin, ein im Vergleich zum Stand der Technik verbessertes Verfahren bereitzustellen, womit Gürtelaufbaustreifen präziser und schneller auf eine Gürtelaufbautrommel aufgelegt werden können. Insbesondere soll ermöglicht werden, Abweichungen in den Streifenspitzen der Gürtelaufbaustreifen zu besser zu korrigieren.

Gelöst wird diese Aufgabe erfindungsgemäß durch ein Verfahren zum Aufwickeln eines zur Herstellung eines Gürtels eines Fahrzeugluftreifens geeigneten Gürtelaufbaustreifens auf eine Gürtelaufbautrommel nach Anspruch 1 und durch die in Anspruch 9 beanspruchte Vorrichtung gelöst.

Bevorzugt werden in Schritt c. die Form einer Streifenspitze und zumindest eine Kantenlänge einer Streifenspitze des in Schritt b. beförderten ersten Gürtelaufbaustreifens mittels einen, zwei, drei, vier, fünf, sechs oder mehr als sechs Sensoren erfasst, besonders bevorzugt die Form und beide Kantenlängen einer Streifenspitze des ersten Gürtelaufbaustreifens erfasst, ganz besonders bevorzugt die Form und beide Kantenlängen sämtlicher Streifenspitze des ersten Gürtelaufbaustreifens erfasst, insbesondere ganz besonders bevorzugt die Form und beide Kantenlängen sämtlicher Streifenspitze sowie die beiden Seitenkanten des Zwischenteils des ersten Gürtelaufbaustreifens erfasst. Die Streifenspitzen und der Zwischenteil sind für die vorliegende Erfindung nachstehend definiert. Der erste Gürtelaufbaustreifen mit der erfassten Streifenspitze in Schritt d. entspricht dabei dem Gürtelstreifen, welcher in Schritt c. durch die Sensoren erfasst wurde.

Durch den Schritt c. eines erfindungsgemäßen Verfahrens mittels eines, zwei, drei, vier, fünf, sechs oder mehr als sechs Sensoren werden die Form und eine Kantenlänge zumindest einer Streifenspitze eines Gürtelstreifens erfasst und können somit korrigiert werden. Diese Möglichkeit ist bei Verfahren aus dem Stand der Technik nicht gegeben und kann daher bewirken, dass auch dieser Herstellungsschritt bei der Reifenproduktion vollautomatisiert werden kann. Dies würde nicht nur eine beschleunigte Produktion zur Folge haben, sondern auch ein präziseres Aufwickeln des gesamten Gürtelaufbaustreifens ergeben.

Die vordere Streifenspitze wird durch eine Teil der Seitenkante des Gürtelaufbaustreifens, die Grenze zum rechteckigen Zwischenteil des Gürtelaufbaustreifens und der Vorderkante des Gürtelaufbaustreifens begrenzt und weist im Idealfall die Form eines rechtwinkligen Dreiecks auf. Die vordere Streifenspitze umfasst somit zwei Kanten, welche jeweils eine bestimmte Kantenlänge aufweisen: einen Teil der Seitenkante und die Vorderkante Gürtelaufbaustreifens.

Die hintere Streifenspitze wird durch eine Teil der Seitenkante des Gürtelaufbaustreifens, die Grenze zum rechteckigen Zwischenteil des Gürtelaufbaustreifens und der Hinterkante des Gürtelaufbaustreifens begrenzt und weist im Idealfall die Form eines rechtwinkligen Dreiecks auf. Die hintere Streifenspitze umfasst somit zwei Kanten, welche jeweils eine bestimmte Kantenlänge aufweisen: einen Teil der Seitenkante und die Hinterkante Gürtelaufbaustreifens.

Bevorzugt ist ein Verfahren wie vorstehend beschrieben oder wie vorstehend als bevorzugt beschrieben, wobei in Schritt c. nicht nur die Form oder die Kantenlängen einer Streifenspitze erfasst wird, sondern bevorzugt auch die Länge und Form der gesamten Seitenkanten und beider Streifenspitzen des Gürtelaufbaustreifens.

Im Rahmen der vorliegenden Erfindung bedeutet der Ausdruck "Erfassen" bevorzugt, dass die Form oder die Kantenlängen zumindest einer Streifenspitze eines Gürtelaufbaustreifens durch einen vorstehend oder nachstehend definierten Sensor in digitaler Form abgebildet wird. Bevorzugt wird diese digitale Abbildung der Form und Kantenlängen als ein Ist-Zustand benutzt und wird mit einem Soll-Zustand vergleichen. Bei der Form der Streifenspitze oder auch des Zwischenteils eines Gürtelaufbaustreifens werden auch Löcher oder Schwankungen der Dicke ermittelt. Aus dem Vergleich des Ist- mit dem Soll-Zustand werden dann die Abweichungen der Form und der Kantenlänge ermittelt und der Gürtelstreifen beim Aufwickeln auf die Gürtelaufbautrommel entsprechend ausgerichtet. Das gleiche gilt für das Ausrichten der Seitenkanten eines Gürtelaufbaustreifens.

Bevorzugt findet der Schritt c. statt, während sich der erste Gürtelaufbaustreifen auf dem ersten Förderband befindet.

Bevorzugt ist auch ein Verfahren wie vorstehend beschreiben oder wie vorstehend als bevorzugt beschrieben, wobei das erste Fördermittel das Fördermittel ist, welches sich im Herstellungsprozess des Gürtels bevorzugt unmittelbar vor der Gürtelaufbautrommel befindet, d.h., dass sich zwischen Gürtelaufbautrommel und dem ersten Fördermittel bevorzugt kein weiteres Fördermittel befindet.

Im Rahmen der vorliegenden Erfindung bedeutet der Ausdruck "Verschieben des ersten Fördermittels in einer ersten Verschiebungsrichtung" bevorzugt, dass das erste Fördermittel sowohl in die erste Verschiebungsrichtung als auch entgegen die erste Verschiebungsrichtung verschoben werden kann. Bevorzugt ist daher, dass das Ausrichten in Schritt d. mittels Verschieben des ersten Fördermittels parallel zu einer zur Förderrichtung des ersten Fördermittels unterschiedlichen ersten Verschiebungsrichtung. Dies gilt auch für das Verschieben des zweiten Fördermittels als auch des ersten und zweiten Förderband.

Durch das Verschieben des ersten Fördermittel in eine zur Förderrichtung des ersten Fördermittels unterschiedliche erste Verschiebungsrichtung ist es zudem möglich, durch Installation zum ersten Fördermittel gleichartige Fördermittel, den Gürtelaufbauprozess weiter zu beschleunigen. Aufgrund des Verschiebens wäre es beispielsweise möglich, mehrere Fördermittel unmittelbar vor der Gürtelaufbautrommel anzubringen, welche abwechselnd beladen, abgebildet, ausgerichtet oder aufgewickelt werden (siehe nachstehend beschriebene Ausführungsform).

In so einem nachstehend beschriebenen und erfindungsgemäßen Verfahren würde das Beladen des Fördermittels mit dem vorstehend beschriebenen Schritt b. gleichgesetzt sein, und das Ausrichten oder Aufwickeln des vorstehend beschriebenen Schritts d.. Bei dem nachstehend beschriebenen erfindungsgemäßen Verfahren mit mehreren Förderbändern entspräche der Schritt des Erfassens zumindest einer Seitenkanten des in Schritt b. beförderten ersten Gürtelaufbaustreifens mittels geeigneter Sensoren wie nachstehend beschrieben.

Aufgrund der vorstehend und nachstehend beschriebenen Verwendung mehrerer Fördermittel, welche sich unmittelbar vor der Gürtelaufbautrommel befinden, ist es somit möglich, den Arbeitsablauf in eine noch größere Anzahl an parallel ablaufenden Prozessschritten zu gliedern. Das in einem erfindungsgemäßen Verfahren vorgesehene Verschieben des ersten Fördermittels oder der Gürtelaufbautrommel zum Ausrichten des Gürtelaufbaustreifens ermöglicht somit nicht nur eine höhere Präzision, sondern ermöglicht auch ein zeiteffizienteres Verfahren. Daher ist es auch notwendig, ein schnelles und präzises Erfassen der Form und Kanten eines Gürtelaufbaustreifens zu ermöglichen, da dies ein vorstehend beschriebenes Verfahren zusätzlich beschleunigt.

Bevorzugt ist ein Verfahren, wie vorstehend beschrieben oder wie vorstehend als bevorzugt beschrieben, wobei das Ausrichten und das Aufwickeln in Schritt d. gleichzeitig durchgeführt wird. Dies ermöglicht einen noch zeiteffizienteren Aufbau auf einer Gürtelaufbautrommel.

Bevorzugt ist ein Verfahren wie vorstehend beschrieben oder wie vorstehend als bevorzugt beschrieben, wobei die erste Verschiebungsrichtung relativ zur Förderrichtung des ersten Förderbandes
- schräg , bevorzugt in einem Winkel von 10° bis 45°, besonders bevorzugt 20° bis 34°, oder
- rechtwinklig (d.h. parallel zur Drehachse der Gürtelaufbautrommel) ist.

Dies gilt *vice versa* für die Verschiebungsrichtungen eines zweiten, dritten, vierten und weiteren Fördermittels.

Das Verschieben des ersten Fördermittels wird bevorzugt auf Profilschienen oder mittels einer im Allgemeinen bekannten Linearführung durchgeführt, wobei das Verschieben des ersten Fördermittels durch einen Motor mit Kugelrollspindel ermöglicht wird. Profilschienen oder andere allgemein bekannte Linearführungen ermöglichen in Verbindung mit einem Motor mit Kugelrollspindel als Antrieb eine besonders präzise als auch eine besonders schnelle Aufwicklung des Gürtelaufbaustreifens auf die Gürtelaufbautrommel.

Besonders bevorzugt ist ein Verfahren wie vorstehend beschrieben oder wie vorstehend als bevorzugt beschrieben, wobei die erste Verschiebungsrichtung des ersten Fördermittels schräg zur Förderrichtung des ersten Fördermittels ist, bevorzugt so wie vorstehend als bevorzugt beschrieben. Der Vorteil dieses Aspekts der vorliegenden Erfindung ist, dass eine einfachere und kostengünstigere Schienenkonstruktion verwendet werden kann als bei einer vorstehend beschriebenen rechtwinkligen ersten Verschiebungsrichtung. Auch die Nachrüstbarkeit des vorstehend beschriebenen Aspekts der vorliegenden Erfindung ist besser als bei einer vorstehend beschriebenen rechtwinkligen ersten Verschiebungsrichtung.

Ganz besonders bevorzugt ist ein Verfahren wie vorstehend als bevorzugt beschrieben oder wie vorstehend als besonders bevorzugt beschrieben, wobei die Fördergeschwindigkeit des ersten Fördermittels und das Verschieben des ersten Fördermittels in die erste Verschiebungsrichtung so gesteuert oder geregelt werden, dass der Gürtelaufbaustreifen beim Aufwickeln auf die Gürtelaufbautrommel gedehnt oder gestaucht werden kann.

Dies hat den Vorteil, dass nicht nur Abweichungen von der Gradlinigkeit der Seitenkanten, sondern auch Abweichungen in der Länge des Gürtelaufbaustreifens oder der hinteren oder der vorderen Streifenspitze ausgeglichen werden können.

Erfindungsgemäß umfasst das Verfahren die folgenden Schritte:
a. Bereitstellen oder Herstellen eines ersten Gürtelaufbaustreifens mit zwei Streifenspitzen und eines zweiten Gürtelaufbaustreifens mit zwei Streifenspitzen,
b. Befördern
   - des in Schritt a. bereitgestellten oder hergestellten ersten Gürtelaufbaustreifens mit zwei Streifenspitzen über ein erstes Fördermittel mindestens zweier Fördermittel und
   - des in Schritt a. bereitgestellten oder hergestellten zweiten Gürtelaufbaustreifens mit zwei Streifenspitzen über ein zweites Fördermittel der mindestens zwei Fördermittel,
c. Erfassen der Form und/oder zumindest einer Kantenlänge zumindest einer Streifenspitze des in Schritt b. beförderten ersten und/oder zweiten Gürtelaufbaustreifens mittels einen, zwei, drei, vier, fünf, sechs oder mehr als sechs Sensoren,
d. 1 Ausrichten des auf dem ersten Fördermittel beförderten ersten Gürtelaufbaustreifens mit einer erfassten Streifenspitze gegenüber einer in Förderrichtung nachgeordneten Gürtelaufbautrommel und gleichzeitiges Aufwickeln des ersten Gürtelaufbaustreifens auf die in Förderrichtung des ersten Fördermittels nachgeordnete Gürtelaufbautrommel und
d.2 Ausrichten des auf dem zweiten Fördermittel beförderten zweiten Gürtelaufbaustreifens mit einer erfassten Streifenspitze gegenüber einer in Förderrichtung nachgeordneten Gürtelaufbautrommel und gleichzeitiges Aufwickeln des zweiten Gürtelaufbaustreifens auf die in Förderrichtung des zweiten Fördermittels nachgeordnete Gürtelaufbautrommel,
wobei das erste und das zweites Fördermittel bevorzugt in einer Ebene nebeneinander angeordnet sind.

Bevorzugt werden in Schritt c. die Form einer Streifenspitze und zumindest eine Kantenlänge einer Streifenspitze des in Schritt b. beförderten ersten und zweiten Gürtelaufbaustreifens mittels einen, zwei, drei, vier, fünf, sechs oder mehr als sechs Sensoren erfasst, besonders bevorzugt die Form und beide Kantenlängen einer Streifenspitze des ersten oder zweiten Gürtelaufbaustreifens, ganz besonders bevorzugt die Form und beide Kantenlängen sämtlicher Streifenspitze des ersten und zweiten Gürtelaufbaustreifens, insbesondere ganz besonders bevorzugt die Form und beide Kantenlängen sämtlicher Streifenspitze sowie die Seitenkanten des ersten und zweiten Gürtelaufbaustreifens.

Ein Vorteil des vorstehend beschriebenen Aspekts der Erfindung ist, dass durch die Verwendung von zwei Fördermitteln das Aufwickeln auf die Gürtelaufbautrommel im Vergleich zur Verwendung eines Fördermittels schneller erfolgen kann, da die vorstehend beschriebenen Schritte des Beladens, das Erfassen, des Ausrichtens und Aufwickeln zeiteffizienter durchgeführt werden können. Bei diesem erfindungsgemäßen Verfahren mit eine ersten und einem zweiten Fördermittel war bisher insbesondere das präzise Erfassen der Seitenkanten des Gürtelaufbaustreifens und die Formen der Streifenspitzen der zeitlich limitierende Faktor.

Im Rahmen der vorliegenden Erfindung bedeutet der Ausdruck "in einer Ebene nebeneinander angeordnet" bevorzugt, dass die in Förderrichtung laufende Förderbandoberfläche des ersten Förderbandes oder -mittels planparallel zu der in Förderrichtung laufende Förderbandoberfläche des zweiten Förderbandes oder -mittels ist.

Besonders bevorzugt ist ein Verfahren wie vorstehend beschrieben oder wie vorstehend als bevorzugt beschrieben, wobei der Gürtelaufbaustreifen
- parallele, schräg zur Förderrichtung verlaufend angeordnete und in Kautschuk eingebettete Festigkeitsträger umfasst und
- quer zur Förderrichtung des einen Fördermittels zu beiden Seiten hin durch jeweils eine Seitenkante und an seiner vorderen in Förderrichtung gerichteten Seite durch eine Vorderkante und an seiner hinteren in GegenfÖrderrichtung gerichteten Seite durch eine Hinterkante begrenzt ist, wobei die Vorderkante und die Hinterkante bevorzugt im Wesentlichen parallel zu den Festigkeitsträgern schräg verlaufen, so dass die Vorderkante mit der einen Seitenkante und die Hinterkante mit der anderen Seitenkante jeweils unter Einschluss eines spitzen Winkels - von bevorzugt 10 bis 45°, besonders bevorzugt 20 bis 34° - eine vordere Streifenspitze und eine hintere Streifenspitze bilden, wobei die vordere Streifenspitze und die hintere Streifenspitze derart ausgebildet sind, dass der Zwischenteil des Gürtelaufbaustreifens zwischen der vorderen Streifenspitze und der hinteren Streifenspitze eine rechteckige Form hat.

Bevorzugt ist ein Verfahren wie vorstehend beschrieben oder wie vorstehend als bevorzugt beschrieben, wobei neben dem ersten und/oder zweiten Fördermittel weitere Fördermittel zum Herstellen des Gürtelaufbaustreifens aus einem Endlos-Streifen vorhanden sind, wobei die weiteren Fördermittel bevorzugt weitere Förderbänder sind. Das Herstellen des Gürtelaufbaustreifens aus einem Endlos-Streifen erfolgt dabei bevorzugt durch Zuschneiden mittels einer nachstehend beschriebenen Trennvorrichtung.

Ein Vorteil des vorstehend beschriebenen Aspekts der Erfindung ist, dass durch die beschriebene Anordnung von unmittelbar vor einer Gürtelaufbautrommel angebrachten Fördermitteln in Verbindung mit unmittelbar vor den Fördermitteln angebrachten Trennvorrichtungen, der Aufbau der gesamten Gürtelaufbauanlage umfassend die Fördermittel, die Trennvorrichtung und die eine, zwei oder mehr als zwei Gürtelaufbautrommeln möglichst platzsparend angeordnet und aufgestellt werden können.

Bevorzugt ist ein Verfahren wie vorstehend beschrieben oder wie vorstehend als bevorzugt beschrieben, wobei die in Förderrichtung des ersten Fördermittels nachgeordnete Gürtelaufbautrommel eine erste Gürtelaufbautrommel und die in Förderrichtung des zweiten Fördermittels nachgeordnete Gürtelaufbautrommel ebenfalls die erste Gürtelaufbautrommel ist.

Ein Vorteil des vorstehend beschriebenen Aspekts der Erfindung ist, dass das Aufwickeln von mehreren Gürtelaufbaustreifen auf eine Gürtelaufbautrommel ermöglicht wird.

Bevorzugt ist ein Verfahren wie vorstehend beschrieben oder wie vorstehend als bevorzugt beschrieben, wobei mindestens einer der einen, zwei, drei, vier, fünf, sechs oder mehr als sechs Sensoren zum Erfassen der Form und einer Kantenlänge zumindest einer Streifenspitze des ersten und/oder zweiten Gürtelaufbaustreifens eine der folgenden optischen Sensoren ist: Zeilenkamera, 2D-Flächenkamera, Lichtschnittsensor oder Abstandsmesser. Bevorzugt sind dabei die optischen Sensoren Zeilenkamera, 2D-Flächenkamera und Lichtschnittsensor.

Besonders bevorzugt ist einer der einen, zwei, drei, vier, fünf, sechs oder mehr als sechs Sensoren zum Erfassen der Form und der Kantenlänge zumindest einer Streifenspitze des ersten und/oder zweiten Gürtelaufbaustreifens ein Lichtschnittsensor oder eine Zeilenkamera, ganz besonders bevorzugt ein Lichtschnittsensor.

Ganz besonders bevorzugt sind sämtliche der einen, zwei, drei, vier, fünf, sechs oder mehr als sechs Sensoren zum Erfassen der Form und der Kantenlänge zumindest einer Streifenspitze des ersten und/oder zweiten Gürtelaufbaustreifens Lichtschnittsensoren und/oder Zeilenkameras, insbesondere ganz besonders bevorzugt Lichtschnittsensoren.

Überraschenderweise wurde herausgefunden, dass Zeilenkameras besonders präzise und schnell die Abweichungen der Gürtelaufbaustreifen erfassen.

Überraschenderweise wurde herausgefunden, dass Lichtschnittsensoren besonders präzise und schnell die Abweichungen der Gürtelaufbaustreifen erfassen, insbesondere auch dann, wenn die Farbe des Fördermittels mit der des Gürtelaufbaustreifens übereinstimmt oder dieser ähnelt.

Abstandsmesser können oberhalb oder seitlich vom Förderband angebracht sein, wobei der jeweilige Messstrahl der Abstandsmesser senkrecht zur Förderrichtung verlaufend auf den Gürtelstreifen gerichtet ist. Auf diese beiden Arten können Abweichungen in der Kantenform des Gürtelaufbaustreifens erfasst werden, entweder von oben oder von der Seite. Bevorzugt werden die Abstandsmesser wie vorstehend beschrieben seitlich vom Förderband angebracht, um mit so wenigen Abstandmessern wie möglich Abweichungen in der Kantenform des Gürtelaufbaustreifens erfassen zu können.

Im Rahmen der vorliegenden Erfindung ist ein Lichtschnittsensor beispielsweise das Handelsprodukt "DS 1300" der Firma Cognex.

Im Rahmen der vorliegenden Erfindung ist eine Zeilenkamera beispielsweise das Handelsprodukt "In-Sight 5604" der Firma Cognex.

Im Rahmen der vorliegenden Erfindung ist eine 2D-Flächenkamera beispielsweise das Handelsprodukt "In-Sight 5100C" der Firma Cognex.

Im Rahmen der vorliegenden Erfindung ist ein Abstandsmesser beispielsweise das Handelsprodukt "optoNCDT 1320" der Firma Micro-Epsilon.

Bevorzugt ist ein Verfahren wie vorstehend beschrieben oder wie vorstehend als bevorzugt beschrieben, wobei
- das Ausrichten in Schritt d. und d1. mittels Verschieben des ersten Fördermittels in einer zur Förderrichtung des ersten Fördermittels unterschiedlichen ersten Verschiebungsrichtung
   und/oder
- das Ausrichten in Schritt d2. mittels Verschieben des zweiten Fördermittels in einer zur Förderrichtung des zweiten Fördermittels unterschiedlichen zweiten Verschiebungsrichtung
durchgeführt wird.

Einerseits kann mittels des Verschiebens der Fördermittel in die erste oder zweite Verschiebungsrichtung wie vorstehend beschrieben der erste oder der zweite Gürtelaufbaustreifen gegenüber der Gürtelaufbautrommel ausgerichtet werden. Andererseits ermöglicht das Verschieben der Fördermittel zudem, dass kein zusätzliches Fördermittel zum Ausrichten des Gürtelaufbaustreifens gegenüber eines weiteren Fördermittels vorhanden sein muss (vgl. DE 19641509 C2) oder gar die häufig schwere Gürtelaufbautrommel bewegt werden muss (vgl. WO 2015/069102 A1), um den Gürtelaufbaustreifen beim Aufwickeln auf die Gürtelaufbautrommel auszurichten. Dies ermöglicht ein platzsparenderes, schnelleres und präziseres Aufwickeln des Gürtelaufbaustreifens.

Bevorzugt ist ein Verfahren wie vorstehend beschrieben oder wie vorstehend als bevorzugt beschrieben, wobei mindestens zwei Sensoren oberhalb oder seitlich des ersten Fördermittels oder vor dem ersten Fördermittel und/oder oberhalb oder seitlich des zweiten Fördermittels oder vor dem zweiten Fördermittel angebracht sind, um die Form und eine Kantenlänge zumindest einer Streifenspitze des in Schritt b. beförderten ersten oder zweiten Gürtelaufbaustreifens zu erfassen.

In dem vorstehend als bevorzugt beschriebene Verfahren sind bevorzugt ein Sensor, zwei oder drei Sensoren oberhalb des ersten Fördermittels oder des zweiten Fördermittel angebracht.

Ein Vorteil des vorstehend beschriebenen Aspekts der Erfindung ist, dass Sensoren, welche oberhalb der Fördermittel und nicht seitlich oder davor angebracht werden, weder die seitlich der Förderbänder positionierten Arbeiter noch den Herstellungsprozess entlang der Förderrichtung stören. Zudem verschmutzen Sensoren, welche oberhalb der Fördermittel und nicht seitlich oder davor angebracht werden, langsamer und können somit länger eingesetzt werden.

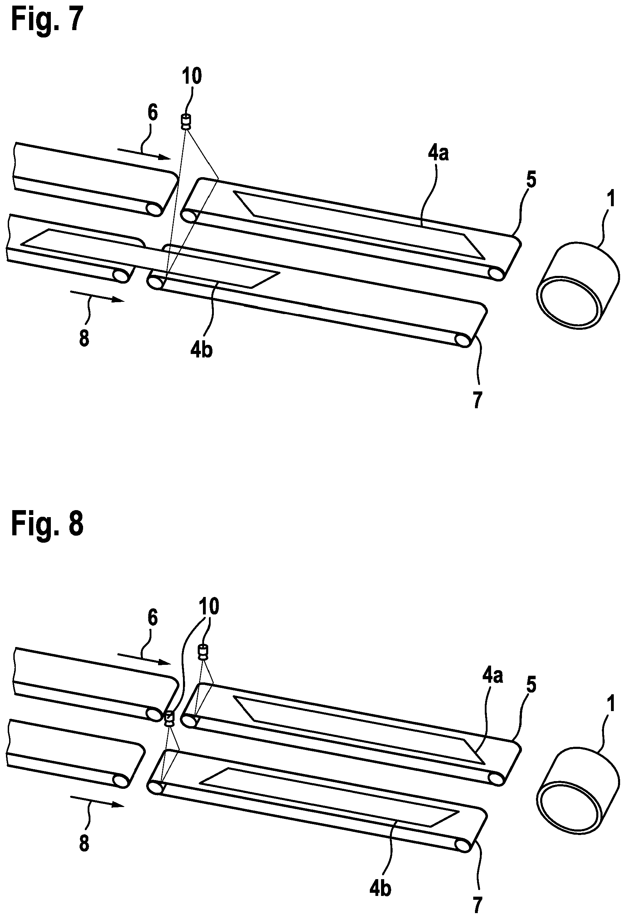

Besonders bevorzugt ist ein Verfahren wie vorstehend beschrieben oder wie vorstehend als bevorzugt beschrieben, wobei genau ein Sensor, bevorzugt eine Zeilenkamera, oberhalb des ersten und zweiten Fördermittels angebracht ist, um die Form und eine Kantenlänge zumindest einer Streifenspitze des in Schritt b., b1. und b2. beförderten ersten oder zweiten Gürtelaufbaustreifens zu erfassen. Dies ist in Figur 7 schematisch dargestellt. In Figur 7 ist die Zeilenkamera oberhalb des Zwischenraums zwischen dem ersten und zweiten Fördermittel angebracht sein.

Besonders bevorzugt ist ein Verfahren wie vorstehend beschrieben oder wie vorstehend als bevorzugt beschrieben, wobei
- genau ein Sensor, bevorzugt eine Zeilenkamera, oberhalb des ersten Fördermittels angebracht ist, um die Form und eine Kantenlänge zumindest einer Streifenspitze des in Schritt b. oder b1. beförderten ersten Gürtelaufbaustreifens zu erfassen,
   und
- genau ein Sensor, bevorzugt eine Zeilenkamera, oberhalb oder seitlich des zweiten Fördermittels oder vor dem zweiten Fördermittel angebracht sind, um die Form und eine Kantenlänge zumindest einer Streifenspitze des in Schritt b2. beförderten zweiten Gürtelaufbaustreifens zu erfassen.

Hierbei sind die beiden Zeilenkamera bevorzugt am Anfang angebracht, also auf der Seite des ersten oder zweiten Fördermittels, auf die der Gürtelaufbaustreifen zuerst trifft.

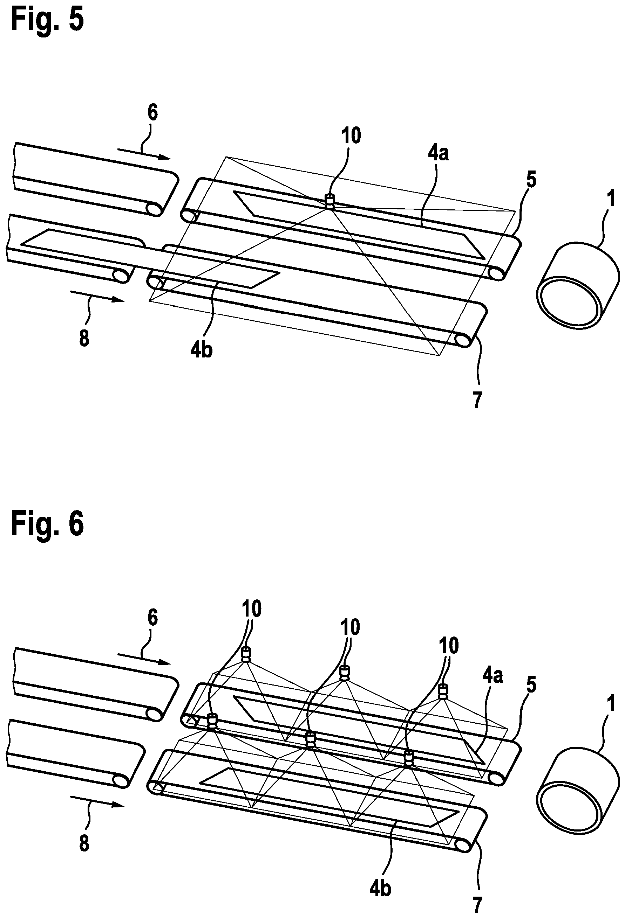

Besonders bevorzugt ist auch ein Verfahren wie vorstehend beschrieben oder wie vorstehend als bevorzugt beschrieben, wobei genau ein Sensor, bevorzugt eine 2D-Flächenkamera, oberhalb des ersten und zweiten Fördermittels angebracht ist, um die Form und eine Kantenlänge zumindest einer Streifenspitze des in Schritt b., b1. und b2. beförderten ersten oder zweiten Gürtelaufbaustreifens zu erfassen. Dies ist in Figur 5 dargestellt.

Besonders bevorzugt ist auch ein Verfahren wie vorstehend beschrieben oder wie vorstehend als bevorzugt beschrieben, wobei
- genau ein Sensor, bevorzugt eine 2D-Flächenkamera, oberhalb des ersten Fördermittels angebracht sind, um die Form und eine Kantenlänge zumindest einer Streifenspitze des in Schritt b. oder b1. beförderten ersten Gürtelaufbaustreifens zu erfassen,
   und
- genau ein Sensor, bevorzugt eine 2D-Flächenkamera, oberhalb des zweiten Fördermittels angebracht sind, um die Form und eine Kantenlänge zumindest einer Streifenspitze des in Schritt b2. beförderten zweiten Gürtelaufbaustreifens zu erfassen. Alternativ können diese beiden Sensoren, bevorzugt 2D-Flächenkameras, auch oberhalb des Zwischenraums zwischen dem ersten und zweiten Fördermittel angebracht sein.

Besonders bevorzugt ist auch ein Verfahren wie vorstehend beschrieben oder wie vorstehend als bevorzugt beschrieben, wobei genau drei Sensoren, bevorzugt 2D-Flächenkameras, oberhalb des ersten Fördermittels und des zweiten Fördermittels angebracht sind, um die Form und eine Kantenlänge zumindest einer Streifenspitze des in Schritt b. oder b1. beförderten ersten Gürtelaufbaustreifens oder zumindest eine Seitenkante des in Schritt b2. beförderten zweiten Gürtelaufbaustreifens zu erfassen. Die Sensoren, bevorzugt 2D-Flächenkameras, sind bevorzugt oberhalb des Zwischenraums zwischen dem ersten und zweiten Fördermittel angebracht sein.

Besonders bevorzugt ist ein Verfahren wie vorstehend beschrieben oder wie vorstehend als bevorzugt beschrieben, wobei
- genau zwei Sensoren, bevorzugt 2D-Flächenkameras, oberhalb des ersten Fördermittels angebracht sind, um die Form und eine Kantenlänge zumindest einer Streifenspitze des in Schritt b. oder b1. beförderten ersten Gürtelaufbaustreifens zu erfassen,
   und/oder
- genau zwei Sensoren, bevorzugt 2D-Flächenkameras oberhalb des zweiten Fördermittels angebracht sind, um die Form und eine Kantenlänge zumindest einer Streifenspitze des in Schritt b2. beförderten zweiten Gürtelaufbaustreifens zu erfassen.

Besonders bevorzugt ist ein Verfahren wie vorstehend beschrieben oder wie vorstehend als bevorzugt beschrieben, wobei
- genau drei Sensoren, bevorzugt 2D-Flächenkameras, oberhalb des ersten Fördermittels angebracht sind, um die Form und eine Kantenlänge zumindest einer Streifenspitze des in Schritt b. oder b1. beförderten ersten Gürtelaufbaustreifens zu erfassen,
   und/oder
- genau drei Sensoren, bevorzugt 2D-Flächenkameras oberhalb des zweiten Fördermittels angebracht sind, um die Form und eine Kantenlänge zumindest einer Streifenspitze des in Schritt b2. beförderten zweiten Gürtelaufbaustreifens zu erfassen. Dies ist in Figur 6 dargestellt.

Besonders bevorzugt ist auch ein Verfahren wie vorstehend beschrieben oder wie vorstehend als bevorzugt beschrieben, wobei genau ein Sensor, bevorzugt Lichtschnittsensor, oberhalb des ersten und zweiten Fördermittels angebracht ist, um die Form und eine Kantenlänge zumindest einer Streifenspitze des in Schritt b., b1. und b2. beförderten ersten oder zweiten Gürtelaufbaustreifens zu erfassen. Der Lichtschnittsensor ist dabei bevorzugt oberhalb des Zwischenraums zwischen dem ersten und zweiten Fördermittel angebracht sein und besonders bevorzugt am Anfang des ersten und zweiten Fördermittels angebracht, also auf der Seite des ersten oder zweiten Fördermittels, auf die der Gürtelaufbaustreifen zuerst trifft.

Besonders bevorzugt ist ein Verfahren wie vorstehend beschrieben oder wie vorstehend als bevorzugt beschrieben, wobei
- genau ein Sensor, bevorzugt ein Lichtschnittsensor, oberhalb des ersten Fördermittels angebracht ist, um die Form und eine Kantenlänge zumindest einer Streifenspitze des in Schritt b. oder b1. beförderten ersten Gürtelaufbaustreifens zu erfassen,
   und
- genau ein Sensor, bevorzugt ein Lichtschnittsensor, oberhalb oder seitlich des zweiten Fördermittels oder vor dem zweiten Fördermittel angebracht sind, um die Form und eine Kantenlänge zumindest einer Streifenspitze des in Schritt b2. beförderten zweiten Gürtelaufbaustreifens zu erfassen.

Hierbei sind die beiden Lichtschnittsensoren bevorzugt am Anfang angebracht, also auf der Seite des ersten oder zweiten Fördermittels, auf die der Gürtelaufbaustreifen zuerst trifft.

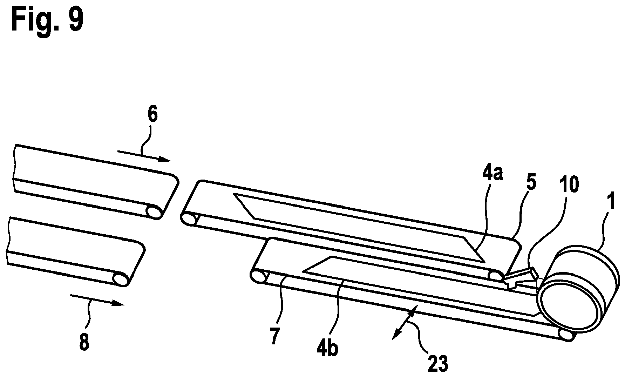

Ganz besonders bevorzugt ist jedoch ein Verfahren wie vorstehend beschrieben oder wie vorstehend als bevorzugt beschrieben, wobei genau ein Lichtschnittsensor oberhalb des ersten und zweiten Fördermittels angebracht ist, um die Form und eine Kantenlänge zumindest einer Streifenspitze des in Schritt b., b1. und b2. beförderten ersten oder zweiten Gürtelaufbaustreifens zu erfassen, wobei der Lichtschnittsensor dabei bevorzugt oberhalb des Zwischenraums zwischen dem ersten und zweiten Fördermittel angebracht ist und unmittelbar vor der Gürtelaufbautrommel angebracht ist, ganz besonders bevorzugt derart angebracht ist, dass der Lichtschnittsensor den Gürtelaufbaustreifen unmittelbar vor dem Aufwickeln auf die Gürtelaufbautrommel erfasst. Diese Ausführungsform der Erfindung ist in Figur 9 schematisch dargestellt.

Dies hat den Vorteil, dass zwischen dem Erfassen in Schritt c., c1. oder c2. und dem Schritt d. dem Gürtelaufbaustreifen keine weiteren Abweichungen mehr hinzugefügt werden können. Somit ist eine solche Anordnung am besten geeignet, um eine möglichst fehlerfreies Aufwickeln zu garantieren ohne dabei eine große Anzahl Sensoren zu verwenden.

Bevorzugt ist ein Verfahren wie vorstehend beschrieben oder wie vorstehend als bevorzugt beschrieben, wobei das Ausrichten in den Schritten d., d1. und/oder d2. mittels Verschieben der Gürtelaufbautrommel parallel zu der Drehachse der Gürtelaufbautrommel durchgeführt wird.

Einerseits ist ein Vorteil des vorstehend beschriebenen Aspekts der Erfindung, dass durch Verschieben der Gürtelaufbautrommel parallel zu ihrer Drehachse und der Fördermittel in Verschiebungsrichtung das Ausrichten schneller erfolgen kann.

Andererseits ist ein weiterer Vorteil des vorstehend beschriebenen Aspekts der Erfindung, dass das Erfassen des ersten Gürtelaufbaustreifens vereinfacht wird, wenn die Förderbänder in einem erfindungsgemäßen Verfahren zum Ausrichten nicht verschoben werden, sondern nur die Gürteltrommel. Die vereinfacht die Regelung zwischen den Sensoren zum Erfassen der Form und der Kantenlänge zumindest einer Streifenspitze des in Schritt b. beförderten ersten Gürtelaufbaustreifens und den Fördermitteln selbst.

Bevorzugt ist ein Verfahren wie vorstehend beschrieben oder wie vorstehend als bevorzugt beschrieben, wobei die Fördermittel und/oder die Gürtelaufbautrommeln magnetische Elemente zum Fixieren des Gürtelaufbaustreifens umfassen, wobei der Gürtelaufbaustreifen bevorzugt Stahl oder andere eisenhaltige Material umfasst.

Ein Vorteil des vorstehend beschriebenen Aspekts der Erfindung ist, dass der Gürtelaufbaustreifen seltener auf einem Fördermittel oder beim Übergang zwischen Fördermittel verrutscht. Besonders vorteilhaft ist jedoch, dass durch das Erfassen in einem erfindungsgemäßen Verfahren auch die Form der Streifenspitzen exakt aufgenommen werden können und mithilfe der magnetischen Elemente korrigiert werden können.

Die magnetischen Elemente sorgen dafür, dass selbst, wenn nur die vordere Streifenspitze angehoben wird oder nur die hintere Streifenspitze auf dem Fördermittel verbleibt, noch genügend Kraft aufgewandt werden kann, um die Streifenspitzen zu verbessern. Somit können Streifenspitzen und Zwischenteile der Gürtelaufbaustreifen in getrennten Prozessschritten korrigiert werden. Insbesondere die Korrektur der Form und auch Länge der Streifenspitzen wird daher mithilfe eines erfindungsgemäßen Verfahrens im Vergleich mit bekannten Verfahren verbessert.

Die Kombination von magnetischen Elementen mit den vorstehend beschriebenen Sensoren ist daher eine besonders bevorzugte Ausführungsform der Erfindung, sowohl in Form eines Verfahrens als auch in Form einer nachstehend beschriebenen Vorrichtung.

Bevorzugt ist ein Verfahren wie vorstehend beschrieben oder wie vorstehend als bevorzugt beschrieben, insbesondere wie vorstehend als besonders bevorzugt beschrieben, wobei zur Ausrichtung in dem Schritt d., d1. oder d2. in einem ersten Verfahrensunterschritt die in Förderrichtung vordere Streifenspitze des Gürtelaufbaustreifens hinsichtlich ihrer Form und ihrer seitlichen Position ausgerichtet wird, wobei in einem zweiten Verfahrensunterschritt das Zwischenteil des Gürtelaufbaustreifens, das sich zwischen vorderer Streifenspitze und hinterer Streifenspitze befindet, hinsichtlich seiner seitlichen Position ausgerichtet wird, und wobei in einem dritten Verfahrensunterschritt die hintere Streifenspitze des Gürtelaufbaustreifens hinsichtlich ihrer Form und ihrer seitlichen Position ausgerichtet wird.

Ein Gürtelaufbaustreifen ist im Rahmen der vorliegenden Erfindung damit in drei Abschnitte unterteilt: der vorderer Streifenspitze, dem Zwischenteil und der hinterer Streifenspitze, wobei jede der Streifenspitzen bevorzug in Form eines rechtwinkligen Dreiecks vorliegen und das Zwischenstück als großmöglichstes Rechteck vorliegt.

Ein Vorteil des vorstehend beschriebenen Aspekts der Erfindung ist, dass nicht nur die Form der vorderen Streifenspitze und der hinteren Streifenspitze korrigiert werden kann, sondern auch ihre genaue Position, da die vordere Streifenspitze und hintere Streifenspitze sowie die Vorder- und Hinterkante besonders häufig und/oder besonders stark abweichen. Bevorzugt werden die vorstehend beschriebenen Sensoren auch hier wie vorstehend beschrieben oder wie vorstehend als bevorzugt beschrieben eingesetzt.

Bevorzugt ist ein Verfahren wie vorstehend beschrieben oder wie vorstehend als bevorzugt beschrieben, wobei
- das erste Fördermittel während Schritt d. oder während Schritt d1. in der ersten Verschiebungsrichtung verschoben wird, um den noch auf dem ersten Fördermittel beförderten Gürtelaufbaustreifenabschnitt des ersten Gürtelaufbaustreifens auf der in Förderrichtung nachgeordnete Gürtelaufbautrommel auszurichten
   und/oder
- das zweite Fördermittel während Schritt d2. in der zweiten Verschiebungsrichtung verschoben wird, um den noch auf dem zweiten Fördermittel beförderten Gürtelaufbaustreifenabschnitt des zweiten Gürtelaufbaustreifens auf der in Förderrichtung nachgeordnete Gürtelaufbautrommel auszurichten.

Ein Vorteil des vorstehend beschriebenen Aspekts der Erfindung ist, dass die einzelnen Gürtelaufbaustreifenabschnitte unabhängig voneinander auf die Gürtelaufbautrommel ausgerichtet werden können und insbesondere die Länge der Streifenspitzen korrigiert werden kann.

Der noch auf einem Fördermittel beförderte Gürtelaufbaustreifenabschnitt kann teilweise oder in Gänze das Zwischenteil und/oder die hintere Streifenspitze des in Schritt d., d1. oder d2. aufgewickelten Gürtelaufbaustreifens umfassen. Bevorzugt umfasst der noch auf einem Fördermittel beförderte Gürtelaufbaustreifenabschnitt zumindest teilweise die hintere Streifenspitze des in Schritt d., d1. oder d2. aufgewickelten Gürtelaufbaustreifens.

Bevorzugt ist ein Verfahren wie vorstehend beschrieben oder wie vorstehend als bevorzugt beschrieben, wobei der erste und zweite Gürtelaufbaustreifen ein Gürtelaufbaustreifen zur Herstellung eines PkW-Fahrzeugluftreifens ist.

Ein Vorteil des vorstehend beschriebenen Aspekts der Erfindung ist, dass aufgrund der kleineren Maße des Gürtelaufbaustreifens zur Herstellung eines PkW-Fahrzeugluftreifens bei Verwendung des gleichen Sensors, insbesondere bei Verwendung der gleichen Zeilenkamera oder der gleichen 2D-Flächenkamera, eine höhere Auflösung im Vergleich zu Gürtelaufbaustreifen zur Herstellung eines Nutzfahrzeugluftreifen. Die höhere Auflösung wird erzielt, da der Abstand zwischen Sensor und Gürtelaufbaustreifen bei gleichbleibendem Format des Aufnahmerahmens des Sensors verringert wird. Dieses Format beträgt normalerweise 4:2 bis 1:1 oder auch 4:3. Als Resultat des geringeren Abstandes zwischen Sensor und Gürtelaufbaustreifen kann ein präziseres Erfassen der Abweichungen erfolgen.

Bevorzugt ist ein Verfahren wie vorstehend beschrieben oder wie vorstehend als bevorzugt beschrieben, wobei zumindest der erste und zweite Gürtelaufbaustreifen ein Gürtelaufbaustreifen zur Herstellung eines Nutzfahrzeugluftreifen ist.

Ein Vorteil des vorstehend beschriebenen Aspekts der Erfindung ist, dass Gürtelaufbaustreifen zur Herstellung eines Nutzfahrzeugluftreifens größere Maße aufweisen als ein Gürtelaufbaustreifen zur Herstellung eines PkW-Fahrzeugluftreifens. Dadurch erhebt sich der Gürtelaufbaustreifen zur Herstellung eines Nutzfahrzeugluftreifens mehr von der Oberfläche des Fördermittels als ein Gürtelaufbaustreifen zur Herstellung eines PkW-Fahrzeugluftreifens und zeigt somit größere Konturen.

In besonders hohem Maße bevorzugt ist ein Verfahren wie vorstehend beschrieben umfassend die folgenden Schritte:
a. Bereitstellen oder Herstellen eines ersten Gürtelaufbaustreifens mit zwei Streifenspitzen und eines zweiten Gürtelaufbaustreifens mit zwei Streifenspitzen,
b. Befördern des in Schritt a. bereitgestellten oder hergestellten ersten Gürtelaufbaustreifens mit einer Vorder- und einer Hinterkante sowie mit zwei zur Vorder- und Hinterkante seitlichen Seitenkanten über ein erstes Fördermittel mindestens zweier Fördermittel und des in Schritt a. bereitgestellten oder hergestellten zweiten Gürtelaufbaustreifens mit einer Vorder- und einer Hinterkante sowie mit zwei zur Vorder- und Hinterkante seitlichen Seitenkanten über ein zweites Fördermittel der mindestens zwei Fördermittel,
c. Erfassen der Form und der Kantenlänge zumindest einer Streifenspitze des in Schritt b. beförderten ersten und zweiten Gürtelaufbaustreifens mittels zwei, drei, vier, fünf, sechs oder mehr als sechs Sensoren,
d.1 Ausrichten des auf dem ersten Fördermittel beförderten ersten Gürtelaufbaustreifens mit einer erfassten Seitenkante gegenüber einer in Förderrichtung nachgeordneten Gürtelaufbautrommel und gleichzeitiges Aufwickeln des ersten Gürtelaufbaustreifens auf die in Förderrichtung des ersten Fördermittels nachgeordnete Gürtelaufbautrommel
   und
d.2 Ausrichten des auf dem zweiten Fördermittel beförderten zweiten Gürtelaufbaustreifens mit einer erfassten Seitenkante gegenüber einer in Förderrichtung nachgeordneten Gürtelaufbautrommel und gleichzeitiges Aufwickeln des zweiten Gürtelaufbaustreifens auf die in Förderrichtung des zweiten Fördermittels nachgeordnete Gürtelaufbautrommel,
wobei
- das erste und das zweites Fördermittel in einer Ebene nebeneinander angeordnet sind,
- die mindestens zwei, drei, vier, fünf, sechs Sensoren zum Erfassen der Form und der Kantenlänge zumindest einer Streifenspitze des ersten oder zweiten Gürtelaufbaustreifens Lichtschnittsensoren sind,
- das Ausrichten in d1. mittels Verschieben des ersten Fördermittels in einer zur Förderrichtung des ersten Fördermittels unterschiedlichen ersten Verschiebungsrichtung durchgeführt wird,
- das Ausrichten in Schritt d2. mittels Verschieben des zweiten Fördermittels in einer zur Förderrichtung des zweiten Fördermittels unterschiedlichen zweiten Verschiebungsrichtung durchgeführt wird,
- mindestens ein Sensor oberhalb des ersten Fördermittels angebracht ist, um die Form und eine Kantenlänge zumindest einer Streifenspitze eines in Schritt b1. beförderten ersten Gürtelaufbaustreifens zu erfassen,
- mindestens ein Sensor oberhalb des zweiten Fördermittels angebracht ist, um die Form und eine Kantenlänge zumindest einer Streifenspitze des in Schritt b2. beförderten zweiten Gürtelaufbaustreifens zu erfassen,
- das erste Fördermittel während Schritt c1. in der Verschiebungsrichtung verschoben wird, um den noch auf dem ersten Fördermittel beförderten ersten Gürtelaufbaustreifenabschnitt auf der in Förderrichtung nachgeordnete Gürtelaufbautrommel auszurichten,
- das zweite Fördermittel während Schritt c2. in der Verschiebungsrichtung verschoben wird, um den noch auf dem zweiten Fördermittel beförderten zweiten Gürtelaufbaustreifenabschnitt auf der in Förderrichtung nachgeordnete Gürtelaufbautrommel auszurichten,
- die Fördermittel und die Gürtelaufbautrommeln magnetische Elemente zum Fixieren des Gürtelaufbaustreifens umfassen, wobei der Gürtelaufbaustreifen Stahl umfasst,
   und
- der erste und zweite Gürtelaufbaustreifen jeweils ein Gürtelaufbaustreifen zur Herstellung eines PkW-Fahrzeugluftreifens sind.

Die vorstehend beschriebenen vorteilhaften Aspekte eines erfindungsgemäßen Verfahrens zum Aufwickeln eines zur Herstellung eines Gürtels eines Fahrzeugluftreifens geeigneten Gürtelaufbaustreifens auf eine Gürtelaufbautrommel gelten auch für sämtliche Aspekte einer nachstehend beschriebenen Vorrichtung und die nachstehend diskutierten vorteilhaften Aspekte erfindungsgemäßer Vorrichtungen gelten entsprechend für sämtliche Aspekte eines erfindungsgemäßen Verfahrens zum Aufwickeln eines zur Herstellung eines Gürtels eines Fahrzeugluftreifens geeigneten Gürtelaufbaustreifens auf eine Gürtelaufbautrommel.

Die Erfindung betrifft auch eine Vorrichtung zum Aufwickeln eines zur Herstellung eines Gürtels eines Fahrzeugluftreifens geeigneten Gürtelaufbaustreifens auf eine nachgeordnete Gürtelaufbautrommel nach Anspruch 9, wie in einem Verfahren nach dem vorangehenden Ansprüchen beschrieben, umfassend:
a. eine Gürtelaufbautrommel
b. ein erstes der Gürtelaufbautrommel in Förderrichtung vorgeordnetes Fördermittel zum Aufwickeln eines Gürtelaufbaustreifens auf eine Gürtelaufbautrommel
   und
c. einen, zwei, drei, vier, fünf, sechs oder mehr als sechs Sensoren zum Erfassen der Form und zumindest einer Kantenlänge zumindest einer Streifenspitze eines Gürtelaufbaustreifens
d. Mittel zum Verschieben
   - des ersten Fördermittels in einer zur Förderrichtung des ersten Fördermittels unterschiedlichen ersten Verschiebungsrichtung
      und/oder
   - der Gürteltrommel in eine Verschiebungsrichtung parallel zu Drehachse der Gürteltrommel,
   sodass ein auf dem Fördermittel beförderter Gürtelaufbaustreifen auf der Gürtelaufbautrommel ausgerichtet werden kann.

Bevorzugt ist eine Vorrichtung wie vorstehend beschrieben oder wie vorstehend als bevorzugt beschrieben, wobei mindestens einer der einen, zwei, drei, vier, fünf, sechs oder mehr als sechs Sensoren zum Erfassen der Form und der Kantenlänge zumindest einer Streifenspitze des ersten und/oder zweiten Gürtelaufbaustreifens eine der folgenden optischen Sensoren ist: Zeilenkamera, 2D-Flächenkamera, Lichtschnittsensor, Abstandsmesser. Besonders bevorzugt sind sämtliche Sensoren zum Erfassen der Form und der Kantenlänge zumindest einer Streifenspitze des ersten und/oder zweiten Gürtelaufbaustreifens Lichtschnittsensoren.

Bevorzugt ist eine Vorrichtung wie vorstehend beschrieben oder wie vorstehend als bevorzugt beschrieben, wobei die Mittel zum Verschieben des ersten Fördermittels Profilschienen oder eine allgemein bekannte Linearführung wie vorstehend beschrieben oder wie vorstehend als bevorzugt beschrieben umfasst.

Bevorzugt ist auch eine Vorrichtung wie vorstehend beschrieben oder wie vorstehend als bevorzugt beschrieben, wobei die Vorrichtung eine Trennvorrichtung zum Herstellen eines Gürtelaufbaustreifens aus einem Endlos-Streifens wie vorstehend beschrieben oder wie vorstehend als bevorzugt beschrieben umfasst.

Bevorzugt ist eine Vorrichtung wie vorstehend beschrieben oder wie vorstehend als bevorzugt beschrieben, wobei die Mittel zum Verschieben des ersten Fördermittels, die Antriebsmittel des ersten Fördermittels, so geregelt werden können, dass zur Ausrichtung in dem Schritt d., d1. oder d2. in einem ersten Verfahrensunterschritt die in Förderrichtung vordere Streifenspitze des Gürtelaufbaustreifens hinsichtlich ihrer Form und ihrer seitlichen Position ausgerichtet wird, wobei in einem zweiten Verfahrensunterschritt das Zwischenteil des Gürtelaufbaustreifens, das sich zwischen vorderer Streifenspitze und hinterer Streifenspitze befindet, hinsichtlich seiner seitlichen Position ausgerichtet wird, und wobei in einem dritten Verfahrensunterschritt die hintere Streifenspitze des Gürtelaufbaustreifens hinsichtlich ihrer Form und ihrer seitlichen Position ausgerichtet wird.

### Figurenbeschreibung:

Es zeigt:
- Figur 1:: Eine Draufsicht auf eine erfindungsgemäße Vorrichtung mit einer Gürteltrommel, wobei Figur 1 die Vorrichtung in einem Prozesszustand zeigt, der zeitlich vor dem Schritt a. eines erfindungsgemäßen Verfahrens liegt;
- Figur 2:: Eine Draufsicht auf eine erfindungsgemäße Vorrichtung mit einer Gürteltrommel, wobei Figur 2 die Vorrichtung in einem Prozesszustand zeigt, der zeitlich zwischen den Schritten b. und c1. eines erfindungsgemäßen Verfahrens liegt;
- Figur 3:: Eine Draufsicht auf eine erfindungsgemäße Vorrichtung mit einer Gürteltrommel, wobei Figur 3 die Vorrichtung in einem Prozesszustand zeigt, der zeitlich während des Schrittes c1. eines erfindungsgemäßen Verfahrens liegt;
- Figur 4:: Eine Draufsicht auf eine erfindungsgemäße Vorrichtung mit einer Gürteltrommel, wobei Figur 4 die Vorrichtung in einem Prozesszustand zeigt, der zeitlich während des Schrittes c2. eines erfindungsgemäßen Verfahrens liegt;
- Figur 5:: Perspektivische Ansicht auf eine schematisch dargestellte erfindungsgemäße Vorrichtung mit einer 2D-Flächenkamera;
- Figur 6:: Perspektivische Ansicht auf eine schematisch dargestellte erfindungsgemäße Vorrichtung mit einer sechs 2D-Flächenkamera;
- Figur 7:: Perspektivische Ansicht auf eine schematisch dargestellte erfindungsgemäße Vorrichtung mit einer Zeilenkamera am Anfang des ersten und zweiten Förderbandes;
- Figur 8:: Perspektivische Ansicht auf eine schematisch dargestellte erfindungsgemäße Vorrichtung mit zwei Zeilenkameras jeweils am Anfang des ersten bzw. zweiten Förderbandes;
- Figur 9:: Perspektivische Ansicht auf eine schematisch dargestellte erfindungsgemäße Vorrichtung mit zwei Lichtschnittsensoren am Ende des ersten Förderbandes und oberhalb der Gürtelaufbautrommel.

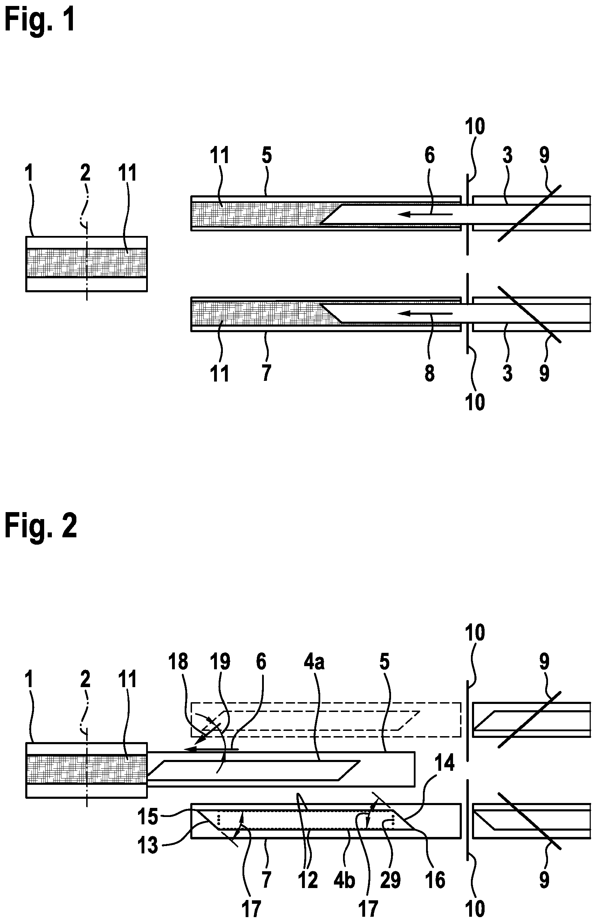

Figur 1 zeigte eine schematische Darstellung einer erfindungsgemäßen Vorrichtung mit einer Gürtelaufbautrommel 1 gemäß einer ersten Ausführungsform in Draufsicht. Die in der Figur 1 schematisch dargestellte Gürtelaufbautrommel 1 umfasst zudem magnetische Elemente 11 zum Fixieren des Gürtelaufbaustreifens 4. Die Drehachse 2 der ersten Gürtelaufbautrommel 1 ist auch dargestellt. In Figur 1 sind zudem schematisch ein erstes Fördermittel 5 und ein zweites Fördermittel 7 dargestellt, auf denen jeweils ein Endlosstreifen 3 in die jeweilige Förderrichtung 6, 8 bis zum Erreichen der Trennposition für die Trennvorrichtungen 9 befördert wird. Die in Figur 1 dargestellten Trennvorrichtungen 9 befinden sich jeweils über einem weiteren Fördermittel, wobei eines der beiden weiteren Fördermittel dem ersten Fördermittel 5 vorgeordnet ist und das andere der beiden weiteren Fördermittel dem zweiten Fördermittel 7 vorgeordnet ist.

Wie in Figur 1 schematisch dargestellt, umfassen das erste und das zweite Fördermittel 5, 7 jeweils magnetische Elemente 11. Der Übersichtlichkeit wegen sind die magnetischen Elemente in den weitern Figuren 2 bis 9 nicht mehr in den Fördermittel dargestellt sind. Es versteht sich jedoch, dass die Fördermittel und Förderbänder in den weitern Figuren 2 bis 9 ebenfalls magnetische Elemente wie in Figur 1 dargestellt aufweisen.

Zudem sind in Figur 1 schematisch zwei Sensoren 10 dargestellt, welche die Positionen der Seitenkanten 12 des Gürtelaufbaustreifens 4 beim Übergang von einem weiteren Fördermittel auf das erste Fördermittel 5 bzw. das zweite Fördermittel 6 ermitteln. Somit wird beim Übergang eines Gürtelaufbaustreifens 4 von einem weiteren Fördermittel auf das erstes Fördermittel 5 oder auf das zweite Fördermittel 7 der Ist-Zustand der Seitenkanten, der vorderen Streifenspitze 15 und der hinteren Streifenspitze 16 ermittelt.

Nach der in Figur 1 schematisch dargestellten Situation des erfindungsgemäßen Verfahrens oder der erfindungsgemäßen Vorrichtung würde das Trennen des Endlosstreifens 3 zur Herstellung eines Gürtelaufbaustreifens erfolgen. Danach würden der hierdurch entstandene erste und zweite Gürtelaufbaustreifen auf das erste Förderband 5 und das zweite Förderband 7 mittig befördert. Im Anschluss daran würde dann der in der Figur 2 schematisch dargestellte folgende Verfahrensschritt durchgeführt werden.

Die in Förderrichtung 6 laufende Förderbandoberfläche des ersten Förderbandes ist in Figur 1 planparallel zu der in Förderrichtung 8 laufende Förderbandoberfläche des zweiten Förderbandes 7. Dies gilt auch für die Förderbänder der Figuren 2 bis 9, in denen das erste und das zweites Förderband 5, 7 immer in einer Ebene nebeneinander angeordnet sind.

Figur 2 zeigte eine schematische Darstellung einer erfindungsgemäßen Vorrichtung mit einer Gürtelaufbautrommel 1 gemäß einer weiteren Ausführungsform in Draufsicht. Die in der Figur 2 schematisch dargestellte Gürtelaufbautrommel 1 umfasst magnetische Elemente 11 zum Fixieren des Gürtelaufbaustreifens 4. Die Drehachse 2 der ersten Gürtelaufbautrommel 1 ist auch dargestellt. In Figur 2 sind zudem schematisch ein erstes Fördermittel 5 und ein zweites Fördermittel 7 dargestellt, auf denen jeweils ein Gürtelaufbaustreifen 4 in die jeweilige Förderrichtung 6, 8 befördert wird. Die in Figur 2 dargestellten Trennvorrichtungen 9 befinden sich jeweils über einem weiteren Fördermittel, wobei eines der beiden weiteren Fördermittel dem ersten Fördermittel 5 vorgeordnet ist und das andere der beiden weiteren Fördermittel dem zweiten Fördermittel 7 vorgeordnet ist.

In Figur 2 ist schematisch dargestellt, dass nach dem Positionieren des ersten Gürtelaufbaustreifens 4 in die Mitte des ersten Förderbandes 5 (diese Position ist in Figur 2 durch die gestrichelte Darstellung angedeutet) das erste Förderband 5 in die erste Verschiebungsrichtung 18 verschoben wird und somit vor der Gürtelaufbautrommel 1 in eine Position zum Aufwickeln des auf dem ersten Förderband 5 befindlichen Gürtelaufbaustreifens 4 gebracht wird. Die erste Verschiebungsrichtung 18 bildet dabei mit der Förderrichtung 6 des ersten Förderbandes 5 einen ersten Winkel 19, welcher in Figur 2 ebenfalls schematisch dargestellt ist.

Beim nun folgenden Verfahrensschritt eines erfindungsgemäßen Verfahrens des Aufwickelns des Gürtelaufbaustreifens 4 auf die erste Gürtelaufbautrommel 1 können Abweichungen der Vorderkante, der Seitenkante, der Hinterkante des Gürtelaufbaustreifens sowie der vorderen und hinteren Streifenspitze durch ein aufeinander abgestimmtes Verschieben des ersten Förderbandes 5 in die erste Verschiebungsrichtung 18 und gleichzeitigem Anpassen der Fördergeschwindigkeit des ersten Förderbandes an eine Bewegungskomponente des Verschiebens korrigiert werden, wobei die Bewegungskomponente parallel zur Förderrichtung des ersten Förderbandes 5.

Bei diesem Verfahrensschritt des Aufwickelns des Gürtelaufbaustreifens 4 auf die erste Gürtelaufbautrommel 1 kann die Form der vorderen und hinteren Streifenspitze durch
a) ein Verschieben des ersten Förderbandes 5 parallel zur ersten Verschiebungsrichtung 18 und gleichzeitigem
b) Anpassen der Fördergeschwindigkeit des ersten Förderbandes 5 an die parallel zur Förderrichtung des ersten Förderbandes 5 verlaufende Bewegungskomponente der ersten erste Verschiebungsrichtung 18
ausgerichtet werden.

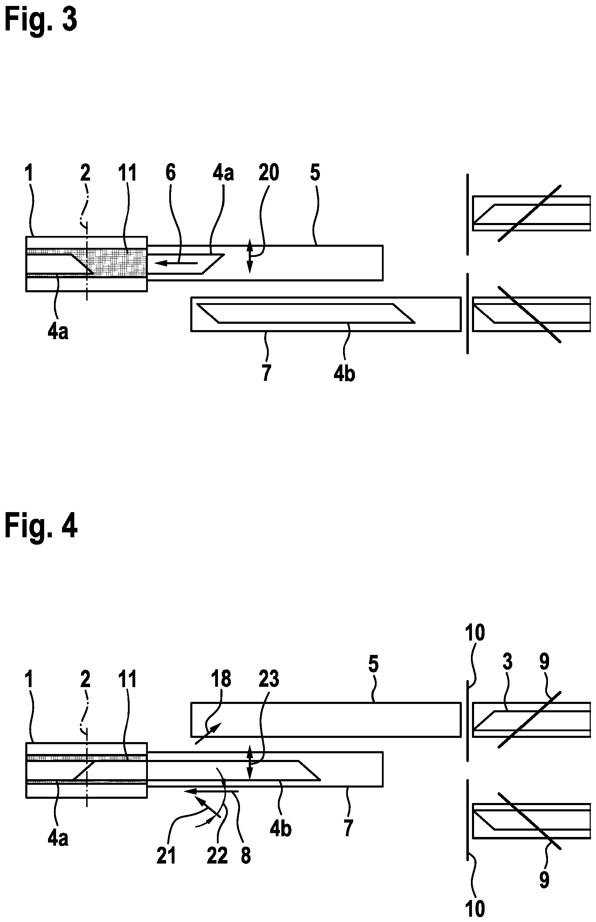

Mit Hilfe der vorstehend beschriebenen Regelung ist es ausreichend, wenn das erste Förderband 5 nur parallel zur ersten Verschiebungsrichtung verschoben werden kann. Dies hat den Vorteil, dass keine weitere Regelung oder Vorrichtung zum Verschieben des ersten Förderbandes 5 parallel zur Drehachse 2 der ersten Gürtelaufbautrommel 1 eingerichtet werden muss. Es ist jedoch auch möglich, weitere Vorkehrungen zu treffen, um ein zur Drehachse 2 der ersten Gürtelaufbautrommel 1 paralleles Verschieben des ersten Förderbandes 5 zu ermöglichen. Ein solch alternatives Verschieben des ersten Förderbandes 5 in eine alternative erste Verschiebungsrichtung ist nachstehend in der Beschreibung zur Figur 3 beschrieben.

Wie vorstehend bereits erwähnt, wurden aus Gründen der Übersichtlichkeit in Figur 3 auf die Darstellung der magnetischen Elemente der Förderbänder verzichtet, insbesondere der des ersten Förderbandes 5 und des zweiten Förderbandes 7. Eine in Figur 2 dargestellte erfindungsgemäße Vorrichtung umfasst dennoch wie vorstehend beschrieben magnetische Elemente.

Hingegen wurde jedoch in Figur 2 zumindest schematisch der Aufbau eines Gürtelaufbaustreifens einmalig dargestellt. Zu sehen sind an dem auf dem zweiten Förderband 7 befindlichen Gürtelaufbaustreifen 4 die Vorderkante 13 und die Hinterkante 16 sowie die Seitenkanten 12 des Gürtelaufbaustreifens 4. Der sich auf dem zweiten Förderband 7 befindliche Gürtelaufbaustreifen 4 umfasst zudem auch eine vordere Streifenspitze 15 und eine hintere Streifenspitze 16, welche jeweils mit den Seitenkanten und der Hinterkante bzw. der Vorderkante einen spitzen Winkel 17 aufspannen. Zwischen der vorderen Streifenspitze 15 und der hinteren Streifenspitze 16 befindet das rechteckige Zwischenteil 29 des Gürtelaufbaustreifens 4, welches durch die gepunkteten Linien angedeutet ist.

Aus Gründen der Übersichtlichkeit ist der vorstehend bestehende spezifische Aufbau eines Gürtelaufbaustreifens 4, wie in Figur 2 dargestellt, in Figur 1 und in den weiteren Figuren nicht noch einmal dargestellt. Die vorstehend beschriebenen Merkmale mit den Bezugszeichen 12 bis 17 gelten jedoch für die anderen in den Figuren 1 bis 9 dargestellten Gürtelaufbaustreifen gleichermaßen.

Figur 3 zeigte eine schematische Darstellung einer erfindungsgemäßen Vorrichtung mit einer Gürtelaufbautrommel 1 gemäß einer weiteren Ausführungsform in Draufsicht. Die in der Figur 3 schematisch dargestellte Gürtelaufbautrommel 1 umfasst magnetische Elemente 11 zum Fixieren des Gürtelaufbaustreifens 4. Die Drehachse 2 der ersten Gürtelaufbautrommel 1 ist auch dargestellt. In Figur 3 sind zudem schematisch ein erstes Fördermittel 5 und ein zweites Fördermittel 7 dargestellt, auf denen jeweils ein Gürtelaufbaustreifen 4 in die jeweilige Förderrichtung 6, 8 befördert wird. Die in Figur 3 dargestellten Trennvorrichtungen 9 befinden sich jeweils über einem weiteren Fördermittel, wobei eines der beiden weiteren Fördermittel dem ersten Fördermittel 5 vorgeordnet ist und das andere der beiden weiteren Fördermittel dem zweiten Fördermittel 7 vorgeordnet ist.

In Figur 3 ist das Verschieben des ersten Förderbands 5 in eine alternative erste Verschiebungsrichtung 20 schematisch dargestellt. Die alternative erste Verschiebungsrichtung 20 bildet dabei mit der Förderrichtung 6 des ersten Förderbandes 5 einen rechten Winkel. Bei dem in Figur 3 dargestellten erfindungsgemäßen Verfahrensschritt des Aufwickelns des Gürtelaufbaustreifens 4 auf die erste Gürtelaufbautrommel 1 können Abweichungen der Vorderkante 13, der Seitenkante 12, der Hinterkante 14 des Gürtelaufbaustreifens sowie in der vorderen und hinteren Streifenspitze 15, 16 durch ein aufeinander abgestimmtes Verschieben des ersten Förderbandes 5 in die alternative erste Verschiebungsrichtung 20 und gleichzeitigem Anpassen der Fördergeschwindigkeit des ersten Förderbandes korrigiert werden. Die Steuerung oder Regelung der alternativen ersten Verschiebungsrichtung 20 in Verbindung mit der Fördergeschwindigkeit des ersten Förderbandes ist somit einfacher als bei einer schrägen ersten Verschiebungsrichtung wie vorstehend zu Figur 2 beschrieben.

Bei dem in Figur 3 dargestellten Verfahrensschritt des Aufwickelns des Gürtelaufbaustreifens 4 auf die erste Gürtelaufbautrommel 1 kann die Form der vorderen und die Form der hinteren Streifenspitze durch
a) ein Verschieben des ersten Förderbandes 5 parallel zur alternativen ersten Verschiebungsrichtung 20 (d.h. parallel zur Drehachse 2 der ersten Gürtelaufbautrommel 1)
   und gleichzeitigem
b) Anpassen der Fördergeschwindigkeit des ersten Förderbandes 5 ausgerichtet werden.

Die vorstehend beschriebene Steuerung oder Regelung muss es erlauben, dass das erste Förderband 5 parallel zur alternativen ersten Verschiebungsrichtung 20 und zur Förderrichtung des ersten Förderbandes 5 verschoben werden kann.

Figur 4 zeigt eine schematische Darstellung einer erfindungsgemäßen Vorrichtung mit einer Gürtelaufbautrommel 1 gemäß einer weiteren Ausführungsform in Draufsicht. Die in der Figur 4 schematisch dargestellte Gürtelaufbautrommel 1 umfasst magnetische Elemente 11 zum Fixieren des Gürtelaufbaustreifens 4. Die Drehachse 2 der ersten Gürtelaufbautrommel 1 ist auch dargestellt. In Figur 4 sind zudem schematisch ein erstes Fördermittel 5 und ein zweites Fördermittel 7 dargestellt. Die in Figur 4 dargestellten Trennvorrichtungen 9 befinden sich jeweils über einem weiteren Fördermittel, wobei eines der beiden weiteren Fördermittel dem ersten Fördermittel 5 vorgeordnet ist und das andere der beiden weiteren Fördermittel dem zweiten Fördermittel 7 vorgeordnet ist.

Figur 4 zeigt eine schematische Darstellung einer erfindungsgemäßen Vorrichtung mit einer Gürtelaufbautrommel 1 nach dem der erste Gürtelaufbaustreifen 4a auf die erste Gürteltrommel 1 aufgelegt ist, das erste Förderband 5 wieder in seine ursprüngliche Position zurückgefahren ist und das zweite Förderband 7 vor der ersten Gürtelaufbautrommel 1 in eine Position zum Aufwickeln des auf dem ersten Förderband 5 befindlichen Gürtelaufbaustreifens 4 gebracht wurde.

In Figur 4 ist das Verschieben des zweiten Förderbands 7 in eine alternative zweite Verschiebungsrichtung 23 während des Aufwickelns des zweiten Gürtelaufbaustreifens 4b mithilfe einer alternativen zweiten Verschiebungsrichtung 23 schematisch dargestellt. Die alternative zweite Verschiebungsrichtung 23 bildet dabei mit der Förderrichtung 8 des zweiten Förderbandes 7 einen rechten Winkel.

Bei dem in Figur 4 dargestellten erfindungsgemäßen Verfahrensschritt des Aufwickelns des zweiten Gürtelaufbaustreifens 4b auf der ersten Gürtelaufbautrommel 1 können Abweichungen der Vorderkante 13, der Seitenkante 12, der Hinterkante 14 des zweiten Gürtelaufbaustreifens 4b sowie der vorderen und hinteren Streifenspitze 15, 16 durch ein aufeinander abgestimmtes Verschieben des zweiten Förderbandes 7 in die alternative erste Verschiebungsrichtung 20 und gleichzeitigem Anpassen der Fördergeschwindigkeit des zweiten Förderbandes 7 korrigiert werden. Beim Auflegen des zweiten Gürtelaufbaustreifens 4b auf den bereits aufgewickelten ersten Gürtelaufbaustreifen 4a muss zudem darauf geachtet werden, der zweite Gürtelaufbaustreifen 4b deckungsgleich auf den ersten Gürtelaufbaustreifen 4a aufgewickelt wird.

Die Steuerung oder Regelung der alternativen zweiten Verschiebungsrichtung 23 in Verbindung mit der Fördergeschwindigkeit des zweiten Förderbandes 7 ist somit einfacher als bei einer schrägen zweiten Verschiebungsrichtung 21.

Im Anschluss an den in Figur 4 schematisch dargestellten Verfahrensschritt wird das zweite Förderband 7 wieder in seine ursprüngliche Position gebracht, der erste Gürtelaufbaustreifen 4a und der zweite Gürtelaufbaustreifen 4b weiterverarbeitend von der ersten Gürteltrommel 1 entfernt und die beiden Endlos-Streifen 3 auf das erste Förderband 5 und auf das zweite Förderband 7 befördert. Danach beginnt das erfindungsgemäße Verfahren wieder mit dem in Figur 1 dargestellten Verfahrensschritt.

Figur 5 zeigt eine schematische Darstellung einer erfindungsgemäßen Vorrichtung mit einer 2D-Flächenkamera als ein Beispiel eines Sensors 10 zum Erfassen der Form und Kantenlängen eines Gürtelaufbaustreifens 4, mit einer Gürtelaufbautrommel 1 und mit zwei Förderbänder 5, 7. In Figur 5 ist dargestellt, dass sich ein erste Gürtelaufbaustreifen 4a auf dem ersten Fördermittel 5 befindet und ein zweiter Gürtelaufbaustreifen 4b auf das zweite Förderband 7 befördert wird.

Dargestellt ist zudem, welche Fläche der Sensor 10 zum Erfassen der Form und der Kantenlängen eines Gürtelaufbaustreifens abdeckt, wenn er wie in Figur 5 dargestellt mittig im Zwischenraum zwischen dem ersten Förderband 5 und zweiten Förderband 7 angebracht ist. Der Vorteil der in Figur 5 dargestellten Ausführungsform ist, dass nur ein Sensor benutzt werden muss, um die Form und Kantenlängen eines Gürtelaufbaustreifen auf dem ersten Fördermittel 5 oder auf dem zweiten Fördermittel 7 zu erfassen.

Figur 6 zeigt eine schematische Darstellung einer erfindungsgemäßen Vorrichtung mit einer 2D-Flächenkamera als ein Beispiel eines Sensors 10 zum Erfassen der Form und Kantenlängen eines Gürtelaufbaustreifens 4, mit einer Gürtelaufbautrommel 1 und mit zwei Förderbänder 5, 7. In Figur 6 ist dargestellt, dass sich ein erste Gürtelaufbaustreifen 4a auf dem ersten Fördermittel 5 befindet und ein zweiter Gürtelaufbaustreifen 4b auf dem zweiten Förderband 7 befindet.

Dargestellt ist zudem, welche Fläche die sechs Sensor 10 zum Erfassen der Form und der Kantenlängen eines Gürtelaufbaustreifens abdeckt, wenn wie in Figur 6 dargestellt gleichmäßig drei Sensoren 10 oberhalb des ersten Förderband 5 und drei Sensoren 10 oberhalb des zweiten Förderband 7 angebracht ist. Der Vorteil der in Figur 6 dargestellten Ausführungsform ist, dass sechs Sensoren eine ausreichend große Auflösung erreichen, um die Form und Kantenlängen eines Gürtelaufbaustreifen für die Herstellung eines PkW-Fahrzeugreifens auf dem ersten Fördermittel 5 oder auf dem zweiten Fördermittel 7 zu erfassen.

Figur 7 zeigt eine schematische Darstellung einer erfindungsgemäßen Vorrichtung mit einer Zeilenkamera als ein Beispiel eines Sensors 10 zum Erfassen der Form und Kantenlängen eines Gürtelaufbaustreifens 4, mit einer Gürtelaufbautrommel 1 und mit zwei Förderbänder 5, 7. In Figur 7 ist dargestellt, dass sich ein erste Gürtelaufbaustreifen 4a auf dem ersten Fördermittel 5 befindet und sich ein zweiter Gürtelaufbaustreifen 4b auf dem zweiten Förderband 7 befindet.

Dargestellt ist zudem, welche Fläche der Sensor 10 zum Erfassen der Form und der Kantenlängen eines Gürtelaufbaustreifens abdeckt, wenn er wie in Figur 7 dargestellt oberhalb des Anfangs des ersten Förderband 5 und des zweiten Förderband 7 angebracht ist. Der Vorteil der in Figur 7 dargestellten Ausführungsform ist, dass nur eine Zeilenkamera als Sensor 10 benutzt werden muss, um die Form und Kantenlängen eines Gürtelaufbaustreifen auf dem ersten Fördermittel 5 oder auf dem zweiten Fördermittel 7 zu erfassen.

Figur 8 zeigt eine schematische Darstellung einer erfindungsgemäßen Vorrichtung mit zwei Zeilenkameras als ein Beispiel von Sensoren 10 zum Erfassen der Form und Kantenlängen eines Gürtelaufbaustreifens 4, mit einer Gürtelaufbautrommel 1 und mit zwei Förderbänder 5, 7. In Figur 8 ist dargestellt, dass sich ein erste Gürtelaufbaustreifen 4a auf dem ersten Fördermittel 5 befindet und sich ein zweiter Gürtelaufbaustreifen 4b auf dem zweiten Förderband 7 befindet.

Dargestellt ist zudem, welche Fläche die Zeilenkameras als Sensoren 10 zum Erfassen der Form und der Kantenlängen eines Gürtelaufbaustreifens abdecken, wenn eine Zeilenkamera wie in Figur 8 dargestellt oberhalb des Anfangs des ersten Förderband 5 und die zweite Zeilenkamera oberhalb des zweiten Förderband 7 angebracht ist. Der Vorteil der in Figur 8 dargestellten Ausführungsform ist, dass die Form und Kantenlängen eines Gürtelaufbaustreifen auf dem ersten Fördermittel 5 unabhängig von dem Zustand des Prozessschrittes des zweiten Fördermittel 7 erfasst werden kann. Dies ermöglicht es die beiden Förderbänder 5, 7 unabhängig voneinander einzusetzen.

Figur 9 zeigt eine schematische Darstellung einer erfindungsgemäßen Vorrichtung mit einem Lichtschnittsensor als ein Beispiel eines Sensors 10 zum Erfassen der Form und Kantenlängen eines Gürtelaufbaustreifens 4, mit einer Gürtelaufbautrommel 1 und mit zwei Förderbänder 5, 7. In Figur 9 ist dargestellt, dass sich ein erste Gürtelaufbaustreifen 4a auf dem ersten Fördermittel 5 befindet und sich ein zweiter Gürtelaufbaustreifen 4b auf dem zweiten Förderband 7 befindet. Das zweite Förderband 7 befindet sich in der Position zum Aufwickeln auf die Gürteltrommel 1, nachdem es in die alternative zweite Verschiebungsrichtung 23 verschoben wurde.

Dargestellt ist zudem, welche Fläche der Lichtschnittsensor als Sensoren 10 zum Erfassen der Form und der Kantenlängen eines Gürtelaufbaustreifens abdecken, wenn der Lichtschnittsensor wie in Figur 9 dargestellt oberhalb des Anfangs des ersten Förderband 5 und oberhalb des zweiten Förderband 7 derart angebracht ist, dass der Lichtschnittsensor den Gürtelaufbaustreifen unmittelbar vor dem Aufwickeln auf die Gürtelaufbautrommel erfasst. Der Vorteil der in Figur 9 dargestellten Ausführungsform ist, dass die Form und Kantenlängen eines Gürtelaufbaustreifen auf dem ersten Fördermittel 5 unabhängig von dem Zustand des Prozessschrittes des zweiten Fördermittel 7 erfasst werden kann und gleichzeitig nur ein Sensor 10 eingesetzt werden muss. Dies ermöglicht es die beiden Förderbänder 5, 7 unabhängig voneinander einzusetzen. Eine solche Anordnung ist am besten geeignet, um eine möglichst fehlerfreies Aufwickeln zu garantieren ohne dabei eine große Anzahl Sensoren zu verwenden.

### Bezugszeichenliste:

- 1: erste Gürtelaufbautrommel
- 2: Drehachse der ersten Gürtelaufbautrommel
- 3: Endlos-Streifen zur Herstellung eines Gürtelaufbaustreifens
- 4: Gürtelaufbaustreifen; 4a erster und 4b zweiter Gürtelaufbaustreifen
- 5: erstes Fördermittel; erstes Förderband
- 6: Förderrichtung des ersten Förderbands
- 7: zweites Fördermittel; zweites Förderband
- 8: Förderrichtung des zweiten Förderbands
- 9: Trennvorrichtung zum Herstellen eines Gürtelaufbaustreifens aus einem Endlos-Streifen
- 10: Sensoren zum Erfassen der Form und Kantenlängen eines Gürtelaufbaustreifens
- 11: magnetische Elemente zum Fixieren des Gürtelaufbaustreifens
- 12: Seitenkante
- 13: Vorderkante
- 14: Hinterkante
- 15: vordere Streifenspitze
- 16: hintere Streifenspitze
- 17: spitzer Winkel
- 18: erste Verschiebungsrichtung des ersten Förderbandes
- 19: ersten Winkel des ersten Förderbandes
- 20: alternative erste Verschiebungsrichtung des ersten Förderbandes
- 21: zweite Verschiebungsrichtung des zweiten Förderbandes
- 22: zweiter Winkel des zweiten Förderbandes
- 23: alternative zweite Verschiebungsrichtung des zweiten Förderbandes
- 24: zweite Gürtelaufbautrommel
- 25: Drehachse der zweiten Gürtelaufbautrommel
- 26: Drehrichtung der Zweitrommelvorrichtung
- 27: Drehachse der Zweitrommelvorrichtung
- 28: Zweitrommelvorrichtung
- 29: rechteckiges Zwischenteil des Gürtelaufbaustreifens

## Patentansprüche

1. Verfahren zum Aufwickeln eines zur Herstellung eines Gürtels eines Fahrzeugluftreifens geeigneten Gürtelaufbaustreifens (4) auf eine Gürtelaufbautrommel (1), umfassend die folgenden Schritte:
a. Bereitstellen oder Herstellen eines ersten Gürtelaufbaustreifens (4a) mit zwei Streifenspitzen (15, 16) und eines zweiten Gürtelaufbaustreifens (4b) mit zwei Streifenspitzen (15, 16),
b. Befördern
- des in Schritt a. bereitgestellten oder hergestellten ersten Gürtelaufbaustreifens (a) mit zwei Streifenspitzen (15, 16) über ein erstes Fördermittel (5) mindestens zweier Fördermittel (5, 7) und
- des in Schritt a. bereitgestellten oder hergestellten zweiten Gürtelaufbaustreifens (4b) mit zwei Streifenspitzen (15, 16) über ein zweites Fördermittel (7) der mindestens zwei Fördermittel (5, 7),
c. Erfassen der Form und/oder zumindest einer Kantenlänge zumindest einer Streifenspitze (15, 16) des in Schritt b. beförderten ersten und/oder zweiten Gürtelaufbaustreifens (4a, 4b) mittels einen, zwei, drei, vier, fünf, sechs oder mehr als sechs Sensoren (10),
d.1 Ausrichten des auf dem ersten Fördermittel (5) beförderten ersten Gürtelaufbaustreifens (4a) mit einer erfassten Streifenspitze (15, 16) gegenüber einer in Förderrichtung (6) nachgeordneten Gürtelaufbautrommel (1) und gleichzeitiges Aufwickeln des ersten Gürtelaufbaustreifens (4a) auf die in Förderrichtung (6) des ersten Fördermittels (5) nachgeordnete Gürtelaufbautrommel (1) und
d.2 Ausrichten des auf dem zweiten Fördermittel (7) beförderten zweiten Gürtelaufbaustreifens (4b) mit einer erfassten Streifenspitze (15, 16) gegenüber einer in Förderrichtung (8) nachgeordneten Gürtelaufbautrommel (1) und gleichzeitiges Aufwickeln des zweiten Gürtelaufbaustreifens (4b) auf die in Förderrichtung (8) des zweiten Fördermittels (7) nachgeordnete Gürtelaufbautrommel (1),
wobei das erste und das zweites Fördermittel (5, 7) in einer Ebene nebeneinander angeordnet sind.

2. Verfahren nach einem der vorangehenden Ansprüche, wobei mindestens einer der einen, zwei, drei, vier, fünf, sechs oder mehr als sechs Sensoren (10) zum Erfassen der Form und einer Kantenlänge zumindest einer Streifenspitze des ersten und/oder zweiten Gürtelaufbaustreifens eine der folgenden optischen Sensoren ist: Zeilenkamera, 2D-Flächenkamera, Lichtschnittsensor oder Abstandsmesser.

3. Verfahren nach einem der vorangehenden Ansprüche, wobei
- das Ausrichten in Schritt d. und d1. mittels Verschieben des ersten Fördermittels (5) in einer zur Förderrichtung (6) des ersten Fördermittels (5) unterschiedlichen ersten Verschiebungsrichtung (18) und/oder
- das Ausrichten in Schritt d2. mittels Verschieben des zweiten Fördermittels (7) in einer zur Förderrichtung (8) des zweiten Fördermittels (7) unterschiedlichen zweiten Verschiebungsrichtung (21)
durchgeführt wird.

4. Verfahren nach einem der vorangehenden Ansprüche, wobei mindestens zwei Sensoren (10) oberhalb oder seitlich des ersten Fördermittels (5) oder vor dem ersten Fördermittel (5) und/oder oberhalb oder seitlich des zweiten Fördermittels (5) oder vor dem zweiten Fördermittel (5) angebracht sind, um die Form und eine Kantenlänge zumindest einer Streifenspitze (15, 16) des in Schritt b. beförderten ersten oder zweiten Gürtelaufbaustreifens (4a, 4b) zu erfassen.

5. Verfahren nach einem der vorangehenden Ansprüche, wobei das Ausrichten in den Schritten d., d1. und/oder d2. mittels Verschieben der Gürtelaufbautrommel (1) parallel zu der Drehachse (2) der Gürtelaufbautrommel (1) durchgeführt wird.

6. Verfahren nach einem der vorangehenden Ansprüche, wobei
- das erste Fördermittel (5) während Schritt d. oder während Schritt d1. in der ersten Verschiebungsrichtung (18) verschoben wird, um den noch auf dem ersten Fördermittel (5) beförderten Gürtelaufbaustreifenabschnitt des ersten Gürtelaufbaustreifens (4a) auf der in Förderrichtung (6) nachgeordnete Gürtelaufbautrommel (1) auszurichten
und/oder
- das zweite Fördermittel (7) während Schritt d2. in der zweiten Verschiebungsrichtung (21) verschoben wird, um den noch auf dem zweiten Fördermittel (7) beförderten Gürtelaufbaustreifenabschnitt des zweiten Gürtelaufbaustreifens (4b) auf der in Förderrichtung (8) nachgeordnete Gürtelaufbautrommel (1) auszurichten.

7. Verfahren nach einem der vorangehenden Ansprüche, wobei die Fördermittel (5, 7) und/oder die Gürtelaufbautrommel (1) magnetische Elemente (11) zum Fixieren des Gürtelaufbaustreifens (4) umfassen.

8. Verfahren nach einem der vorangehenden Ansprüche, wobei der erste und zweite Gürtelaufbaustreifen (4a, 4b) ein Gürtelaufbaustreifen zur Herstellung eines PkW-Fahrzeugluftreifens ist oder
zumindest der erste und zweite Gürtelaufbaustreifen (4a, 4b) jeweils ein Gürtelaufbaustreifen zur Herstellung eines Nutzfahrzeugluftreifens ist.

9. Vorrichtung zum Aufwickeln eines zur Herstellung eines Gürtels eines Fahrzeugluftreifens geeigneten Gürtelaufbaustreifens (4) auf eine nachgeordnete Gürtelaufbautrommel (1) wie in einem Verfahren nach dem vorangehenden Ansprüchen beansprucht umfassend:
a. eine Gürtelaufbautrommel (1)
b. ein erstes der Gürtelaufbautrommel (1) in Förderrichtung (6) unmittelbar vorgeordnetes Fördermittel (5) zum Aufwickeln eines Gürtelaufbaustreifens (4) auf eine unmittelbar nach dem ersten Fördermittel (5) Gürtelaufbautrommel (1) und ein zweites der Gürtelaufbautrommel (1) in Förderrichtung (6) unmittelbar vorgeordnetes Fördermittel (7) zum Aufwickeln eines Gürtelaufbaustreifens (4) auf eine Gürtelaufbautrommel (1)
c. einen, zwei, drei, vier, fünf, sechs oder mehr als sechs Sensoren (10) zum Erfassen der Form und einer Kantenlänge zumindest einer Streifenspitze (15, 16) eines Gürtelaufbaustreifens (4, 4a)
d. Mittel zum Verschieben
- des ersten und des zweiten Fördermittels (5, 7) in einer zur Förderrichtung (6) des ersten Fördermittels (5) unterschiedlichen ersten Verschiebungsrichtung (18)
und/oder
- der Gürteltrommel (1) in eine Verschiebungsrichtung parallel zur Drehachse (2) der Gürteltrommel (1),
**dadurch gekennzeichnet, dass**
die Mittel zum Verschieben dazu eingerichtet sind, dass ein auf dem ersten und dem zweiten Fördermittel (5, 7) beförderter Gürtelaufbaustreifen (4, 4a) auf der Gürtelaufbautrommel (1) ausgerichtet werden kann.

## Claims

1. Method for winding a belt building strip (4), which is suitable for producing a belt of a vehicle pneumatic tyre, onto a belt building drum (1), comprising the following steps:
a. providing or producing a first belt building strip (4a) with two strip tips (15, 16) and a second belt building strip (4b) with two strip tips (15, 16),
b. conveying
- the first belt building strip (a) with two strip tips (15, 16) provided or produced in step a. by a first conveying means (5) of at least two conveying means (5, 7), and
- the second belt building strip (4b) with two strip tips (15, 16) provided or produced in step a. by a second conveying means (7) of the at least two conveying means (5, 7),
c. detecting the shape and/or at least one edge length of at least one strip tip (15, 16) of the first and/or second belt building strip (4a, 4b) conveyed in step b. by means of one, two, three, four, five, six or more than six sensors (10),
d.1 aligning the first belt building strip (4a) conveyed on the first conveying means (5) with a detected strip tip (15, 16) relative to a belt building drum (1) arranged downstream in a conveying direction (6), and simultaneously winding the first belt building strip (4a) onto the belt building drum (1) arranged downstream in the conveying direction (6) of the first conveying means (5), and
d.2 aligning the second belt building strip (4b) conveyed on the second conveying means (7) with a detected strip tip (15, 16) relative to a belt building drum (1) arranged downstream in a conveying direction (8), and simultaneously winding the second belt building strip (4b) onto the belt building drum (1) arranged downstream in the conveying direction (8) of the second conveying means (7),
wherein the first and the second conveying means (5, 7) are arranged adjacent to one another in a plane.

2. Method according to any one of the preceding claims, wherein at least one of the one, two, three, four, five, six or more than six sensors (10) for detecting the shape and an edge length of at least one strip tip of the first and/or second belt building strip is one of the following optical sensors: line-scan camera, 2D area-scan camera, light-section sensor or distance sensor.

3. Method according to any one of the preceding claims, wherein
- the alignment in steps d. and d1. is performed by displacement of the first conveying means (5) in a first displacement direction (18) that differs from the conveying direction (6) of the first conveying means (5),
and/or
- the alignment in step d2. is performed by displacement of the second conveying means (7) in a second displacement direction (21) that differs from the conveying direction (8) of the second conveying means (7).

4. Method according to any one of the preceding claims, wherein at least two sensors (10) are attached above or to the side of the first conveying means (5) or upstream of the first conveying means (5), and/or above or to the side of the second conveying means (5) or upstream of the second conveying means (5), in order to detect the shape and an edge length of at least one strip tip (15, 16) of the first or second belt building strip (4a, 4b) conveyed in step b.

5. Method according to any one of the preceding claims, wherein the alignment in steps d., d1. and/or d2. is performed by displacement of the belt building drum (1) parallel to the axis of rotation (2) of the belt building drum (1).

6. Method according to any one of the preceding claims, wherein
- the first conveying means (5) is, during step d. or during step d1., displaced in the first displacement direction (18) in order to align that belt building strip section of the first belt building strip (4a) which is still being conveyed on the first conveying means (5) with the belt building drum (1) arranged downstream in the conveying direction (6), and/or
- the second conveying means (7) is, during step d2., displaced in the second displacement direction (21) in order to align that belt building strip section of the second belt building strip (4b) which is still being conveyed on the second conveying means (7) with the belt building drum (1) arranged downstream in the conveying direction (8).

7. Method according to any one of the preceding claims, wherein the conveying means (5, 7) and/or the belt building drum (1) comprise magnetic elements (11) for fixing the belt building strip (4).

8. Method according to any one of the preceding claims, wherein the first and second belt building strip (4a, 4b) is a belt building strip for producing a passenger motor vehicle pneumatic tyre, or at least the first and second belt building strip (4a, 4b) is in each case a belt building strip for producing a utility vehicle pneumatic tyre.

9. Device for winding a belt building strip (4), which is suitable for producing a belt of a vehicle pneumatic tyre, onto a belt building drum (1) arranged downstream as claimed in a method according to the preceding claims, comprising:
a. a belt building drum (1),
b. a first conveying means (5), which is arranged directly upstream of the belt building drum (1) in a conveying direction (6), for winding a belt building strip (4) onto a belt building drum (1) directly downstream of the first conveying means (5), and a second conveying means (7), which is arranged directly upstream of the belt building drum (1) in the conveying direction (6), for winding a belt building strip (4) onto a belt building drum (1),
c. one, two, three, four, five, six or more than six sensors (10) for detecting the shape and an edge length of at least one strip tip (15, 16) of a belt building strip (4, 4a),
d. means for displacing
- the first and the second conveying means (5, 7) in a first displacement direction (18) that differs from the conveying direction (6) of the first conveying means (5),
and/or
- the belt building drum (1) in a displacement direction parallel to the axis of rotation (2) of the belt building drum (1),
**characterized in that**
the means for displacement are configured such that a belt building strip (4, 4a) conveyed on the first and the second conveying means (5, 7) can be aligned with the belt building drum (1).

## Revendications

1. Procédé d'enroulement d'une bande de structure de ceinture (4) permettant de fabriquer une ceinture d'un pneumatique de véhicule sur un tambour de structure de ceinture (1), comprenant les étapes suivantes consistant à :
a) fournir ou fabriquer une première bande de structure de ceinture (4a) dotée de deux pointes de bande (15, 16) et une deuxième bande de structure de ceinture (4b) dotée de deux pointes de bande (15, 16),
b) transporter
- la première bande de structure de ceinture (a) dotée de deux pointes de bande (15, 16), fournie ou fabriquée à l'étape a), par un premier moyen de transport (5) parmi au moins deux moyens de transport (5, 7), et
- la deuxième bande de structure de ceinture (4b) dotée de deux pointes de bande (15, 16), fournie ou fabriquée à l'étape a), par un deuxième moyen de transport (7) parmi les au moins deux moyens de transport (5, 7),
c) détecter la forme et/ou au moins une longueur d'arête d'au moins une pointe de bande (15, 16) de la première et/ou deuxième bande de structure de ceinture (4a, 4b), transportée à l'étape b), au moyen d'un, de deux, de trois, de quatre, de cinq, de six ou de plus de six capteurs (10),
d.1) aligner la première bande de structure de ceinture (4a) dotée d'une pointe de bande (15, 16) détectée, transportée sur le premier moyen de transport (5), par rapport à un tambour de structure de ceinture (1) placé en aval dans la direction de transport (6), et enrouler en même temps la première bande de structure de ceinture (4a) sur le tambour de structure de ceinture (1) placé en aval dans la direction de transport (6) du premier moyen de transport (5), et
d.2) aligner la deuxième bande de structure de ceinture (4b) dotée d'une pointe de bande (15, 16) détectée, transportée sur le deuxième moyen de transport (7), par rapport à un tambour de structure de ceinture (1) placé en aval dans la direction de transport (8), et enrouler en même temps la deuxième bande de structure de ceinture (4b) sur le tambour de structure de ceinture (1) placé en aval dans la direction de transport (8) du deuxième moyen de transport (7),
le premier et le deuxième moyen de transport (5, 7) étant disposés côte à côte dans un plan.

2. Procédé selon l'une quelconque des revendications précédentes, dans lequel au moins l'un dudit un, des deux, trois, quatre, cinq, six ou plus de six capteurs (10) destinés à détecter la forme et une longueur d'arête d'au moins une pointe de bande de la première et/ou deuxième bande de structure de ceinture est l'un des capteurs optiques suivants : une caméra linéaire, une caméra de surface 2D, un capteur de profil ou un télémètre.

3. Procédé selon l'une quelconque des revendications précédentes, dans lequel
- l'alignement aux étapes d) et d1) est effectué au moyen d'un décalage du premier moyen de transport (5) dans une première direction de décalage (18) différente de la direction de transport (6) du premier moyen de transport (5),
et/ou
- l'alignement à l'étape d2) est effectué au moyen d'un décalage du deuxième moyen de transport (7) dans une deuxième direction de décalage (21) différente de la direction de transport (8) du deuxième moyen de transport (7).

4. Procédé selon l'une quelconque des revendications précédentes, dans lequel au moins deux capteurs (10) sont disposés au-dessus ou à côté du premier moyen de transport (5) ou devant le premier moyen de transport (5) et/ou au-dessus ou à côté du deuxième moyen de transport (5) ou devant le deuxième moyen de transport (5) afin de détecter la forme et une longueur d'arête d'au moins une pointe de bande (15, 16) de la première ou deuxième bande de structure de ceinture (4a, 4b) transportée à l'étape b).

5. Procédé selon l'une quelconque des revendications précédentes, dans lequel l'alignement aux étapes d), d1) et/ou d2) est effectué au moyen d'un décalage du tambour de structure de ceinture (1) en parallèle à l'axe de rotation (2) du tambour de structure de ceinture (1).

6. Procédé selon l'une quelconque des revendications précédentes, dans lequel
- le premier moyen de transport (5) est décalé pendant l'étape d) ou pendant l'étape d1) dans la première direction de décalage (18) afin d'aligner la partie de bande de structure de ceinture de la première bande de structure de ceinture (4a), toujours transportée sur le premier moyen de transport (5), sur le tambour de structure de ceinture (1) placé en aval dans la direction de transport (6),
et/ou
- le deuxième moyen de transport (7) est décalé pendant l'étape d2) dans la deuxième direction de décalage (21) afin d'aligner la partie de bande de structure de ceinture de la deuxième bande de structure de ceinture (4b), toujours transportée sur le deuxième moyen de transport (7), sur le tambour de structure de ceinture (1) placé en aval dans la direction de transport (8).

7. Procédé selon l'une quelconque des revendications précédentes, dans lequel les moyens de transport (5, 7) et/ou le tambour de structure de ceinture (1) comprennent des éléments magnétiques (11) pour fixer la bande de structure de ceinture (4).

8. Procédé selon l'une quelconque des revendications précédentes, dans lequel la première et la deuxième bande de structure de ceinture (4a, 4b) sont des bandes de structure de ceinture pour fabriquer un pneumatique de voiture particulière, ou au moins la première et la deuxième bande de structure de ceinture (4a, 4b) sont respectivement des bandes de structure de ceinture pour fabriquer un pneumatique de véhicule utilitaire.

9. Dispositif d'enroulement d'une bande de structure de ceinture (4) permettant de fabriquer une ceinture d'un pneumatique de véhicule sur un tambour de structure de ceinture (1) placé en aval comme revendiqué dans un procédé selon l'une quelconque des revendications précédentes, comprenant :
a) un tambour de structure de ceinture (1),
b) un premier moyen de transport (5) placé directement en amont du tambour de structure de ceinture (1) dans la direction de transport (6) pour enrouler une bande de structure de ceinture (4) sur un tambour de structure de ceinture (1) directement après le premier moyen de transport (5), et un deuxième moyen de transport (7) placé directement en amont du tambour de structure de ceinture (1) dans la direction de transport (6) pour enrouler une bande de structure de ceinture (4) sur un tambour de structure de ceinture (1),
c) un, deux, trois, quatre, cinq, six ou plus de six capteurs (10) pour détecter la forme et une longueur d'arête d'au moins une pointe de bande (15, 16) d'une bande de structure de ceinture (4, 4a),
d) des moyens pour décaler
- le premier et le deuxième moyen de transport (5, 7) dans une première direction de décalage (18) différente de la direction de transport (6) du premier moyen de transport (5),
et/ou
- le tambour de ceinture (1) dans une direction de décalage parallèle à l'axe de rotation (2) du tambour de ceinture (1),
**caractérisé en ce que** les moyens de décalage sont aménagés de telle sorte qu'une bande de structure de ceinture (4, 4a) transportée sur le premier et le deuxième moyen de transport (5, 7) peut être alignée sur le tambour de structure de ceinture (1).
